(19) **Europäisches Patentamt**
**European Patent Office**
**Office européen des brevets**

(11) **EP 3 098 533 B1**

(12) **EUROPEAN PATENT SPECIFICATION**

(45) Date of publication and mention
of the grant of the patent:
**15.04.2020 Bulletin 2020/16**

(21) Application number: **15743438.2**

(22) Date of filing: **27.01.2015**

(51) Int Cl.:
***F24F 11/62*** *(2018.01)*    ***G05B 19/04*** *(2006.01)*
***G05B 15/02*** *(2006.01)*    ***F24F 11/30*** *(2018.01)*
***F24F 1/00*** *(2019.01)*

(86) International application number:
**PCT/JP2015/052240**

(87) International publication number:
**WO 2015/115444 (06.08.2015 Gazette 2015/31)**

(54) **AIR CONDITIONING SYSTEM AND METHOD FOR CONTROLLING SAME**

KLIMAANLAGENSYSTEM UND VERFAHREN ZUR STEUERUNG DAVON

SYSTÈME DE CONDITIONNEMENT D'AIR ET PROCÉDÉ DE COMMANDE DE CE DERNIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.01.2014 JP 2014016034**

(43) Date of publication of application:
**30.11.2016 Bulletin 2016/48**

(73) Proprietor: **Mitsubishi Heavy Industries, Ltd.
Tokyo 108-8215 (JP)**

(72) Inventors:
• **ITO, Takahide
Tokyo 108-8215 (JP)**
• **ENYA, Atsushi
Tokyo 108-8215 (JP)**

• **MATSUO, Minoru
Tokyo 108-8215 (JP)**

(74) Representative: **Cabinet Beau de Loménie
158, rue de l'Université
75340 Paris Cedex 07 (FR)**

(56) References cited:
**EP-A2- 1 067 445        EP-A2- 2 479 625
WO-A2-2007/097512        JP-A- H0 979 654
JP-A- H1 151 451          JP-A- 2001 022 401
JP-A- 2001 193 992        JP-A- 2004 178 156
JP-A- 2006 177 658        JP-A- 2006 526 294
JP-A- 2008 057 818        JP-A- 2008 101 801
US-A1- 2010 106 313**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

{Technical Field}

The present invention relates to an air conditioning system and a method of controlling the same.

{Background Art}

Conventionally, an air conditioning system includes an indoor unit and an outdoor unit. For example, PTL 1 discloses an air conditioning system in which one outdoor unit and a plurality of indoor units are connected to each other via a common cooling medium piping, and the outdoor unit and each of the indoor units are respectively provided with corresponding control devices.

{Citation List}

{Patent Literature}

{PTL 1}
Japanese Unexamined Patent Application, Publication No. 2012-198020.
EP 2 479 625 discloses an air conditioner, method for controlling outdoor units thereof, and central control system having the same. EP 1 067 445 discloses integrated controller, integrated control system & transmission controller.

{Summary of Invention}

{Technical Problem}

However, in the aforementioned air conditioning system, the indoor units and the outdoor unit are respectively provided with control devices (processors). Therefore, the respective costs of the indoor units and the outdoor unit increase. The air conditioning system is controlled while the indoor units and the outdoor unit communicate with each other. Therefore, all control programs used for the control need to have the same control version. Therefore, some of the indoor units and the outdoor unit constituting the air conditioning system have not easily been changed to equipment with a new control specification.
The present invention is directed to providing an air conditioning system, which can implement respective cost reductions of a single indoor unit and a single outdoor unit, while easily upgrading the system, and a method of controlling the same.

{Solution to Problem}

According to a first aspect of the present invention, there is provided an air conditioning system according to claim 1, including an outdoor unit including communication means, an indoor unit including communication means, an outdoor unit control section that is enabled to communicate with the outdoor unit via a communication medium while existing independently of the outdoor unit, and an indoor unit control section that is enabled to communicate with the indoor unit via a communication medium while existing independently of the indoor unit, in which the outdoor unit control section and the indoor unit control section are enabled to bidirectionally communicate with each other, the outdoor unit control section acquires information on equipment provided in the outdoor unit via the communication medium while outputting a control instruction to the equipment provided in the outdoor unit, and the indoor unit control section acquires information on equipment provided in the indoor unit via the communication medium while outputting a control instruction to the equipment provided in the indoor unit.
The aforementioned air conditioning system enables respective configurations of the indoor unit and the outdoor unit to be simplified because the indoor unit control section and the outdoor unit control section respectively exist independently of the indoor unit and the outdoor unit, enabling reduction in cost. Further, the indoor unit and the outdoor unit need not be respectively implemented with advanced programs (e.g., are implemented with only a communication function and a component actuation function) so that the equipment does not become obsolete, and the outdoor unit and the indoor unit can be easily replaced. Further, the indoor unit control section and the outdoor unit control section are respectively provided independently of the indoor unit and the outdoor unit. Therefore, when the indoor unit control section and the outdoor unit control section are placed under control of a manufacturer of the air conditioning system, for example, a program update can be easily performed.
In the aforementioned air conditioning system, the outdoor unit control section and the indoor unit control section are respectively implemented as virtualized control sections onto the control device.

The aforementioned air conditioning system enables the control sections to be flexibly created depending on connection equipment by existing as the virtualized control sections. Further, hardware resources of the control device may be determined depending on the scale of the air conditioning system. Therefore, waste of CPU (Central Processing Unit) resources can be reduced.

In the aforementioned air conditioning system, the control device includes a master control section, and the master control section acquires attribute information on the indoor unit and the outdoor unit connected to the communication medium at the time of startup, and the virtualized indoor unit control section and the virtualized outdoor unit control section are respectively created based on the attribute information.

The master control section may be created as a virtualized control section in the control device.

In the aforementioned air conditioning system, the master control section may assign each of the indoor unit and the outdoor unit a virtual CPU and a memory region corresponding thereto based on the attribute information, and the virtualized outdoor unit control section and the virtualized indoor unit control section may be created by storing respective control programs corresponding to the attribute information acquired from the indoor unit and the outdoor unit in the respective memory regions.

More specifically, the aforementioned air conditioning system may further include control module storage means storing a control module corresponding to each of a plurality of pieces of equipment provided in the indoor unit and a control module corresponding to each of a plurality of pieces of equipment provided in the outdoor unit, and the master control section may acquire the control module corresponding to the equipment provided in the indoor unit from the control module storage means to create a custom control program and store the custom control program in a memory region corresponding to the indoor unit while acquiring the control module corresponding to the equipment provided in the outdoor unit from the control module storage means to create a custom control program and storing the custom control program in a memory region corresponding to the outdoor unit.

According to the aforementioned air conditioning system, minimum essential control programs can constitute the custom control program when the control programs are customized depending on the equipment provided in each of the indoor unit and the outdoor unit. Thus, the useless control program can be eliminated so that the capacity of the custom control program can be reduced.

In the aforementioned air conditioning system, the master control section may store memory images respectively stored in memory regions of the indoor unit control section and the outdoor unit control section in a master storage region, and the virtualized indoor unit control section and the virtualized outdoor unit control section may be created by storing the respective memory images stored in the master storage region in the respective memory regions corresponding thereto at the time of second and subsequent startups. Thus, processing at the time of second and subsequent startups can be simplified.

In the aforementioned air conditioning system, the control device may start the master control section when the control device receives information on a program update, and the master control section may update the control modules stored in the control module storage means based on the information on the program update, and update the respective custom control programs stored in the memory regions using the updated control modules. This configuration enables all the programs in the virtualized control section to be easily updated by updating the control module used as a base of the customized control program. Thus, the entire system can be easily upgraded.

In the aforementioned air conditioning system, the control device may start the master control section when the control device receives change information on the indoor unit or the outdoor unit, and the master control section may add the indoor unit control section or the outdoor unit control section or update the custom control program in response to the attribute information on the changed indoor unit or outdoor unit. Thus, the custom control programs can be respectively easily created in response to the changes of the indoor unit and the outdoor unit.

In the air conditioning system, when the control device comprises a plurality of control devices, the master control section in any one of the control devices may operate as a higher-level master control section while the master control section in the other control device may operate as a lower-level master control section, the higher-level master control section may allocate, according to the capability of the control device including itself and the capability of the other control device, the indoor unit control section and the outdoor unit control section to each of the control devices, and each of the control devices may create the indoor unit control section and/or the outdoor unit control section allocated to itself.

According to the aforementioned configuration, the higher-level master control section gives only information on the control sections (the indoor unit control section and the outdoor unit control section) to be created for the lower-level master control section in each of the control devices, and the master control section in each of the control devices performs processing for creating the indoor unit control section or the outdoor unit control section in the control device. Therefore, even if the plurality of control devices exist, the indoor unit control sections and the outdoor unit control sections can be efficiently created.

In the aforementioned air conditioning system, the master control section in the control device having the highest capability is selected as the higher-level master control section, for example. Thus, the master control section in the control device having sufficient resources is selected as the higher-level master control section.

In the aforementioned air conditioning system, the control device may be installed on a cloud. Thus, compression of the resources of the control device can be avoided.

In the aforementioned air conditioning system, the virtualized indoor unit control section or the virtualized outdoor unit control section provided in the control device may receive information from a sensor attached to the indoor unit or the outdoor unit and the other outdoor unit control section or the other indoor unit control section, and a predetermined application may give a control instruction to the indoor unit or the outdoor unit corresponding thereto according to a predetermined control rule using the information as an input.

The aforementioned configuration enables autonomous distributed control by the indoor unit control section and the outdoor unit control section to be implemented.

In the aforementioned air conditioning system, the outdoor unit may include a plurality of outdoor units, and the outdoor unit control section may include a plurality of outdoor unit control sections respectively corresponding to the plurality of outdoor units, the plurality of outdoor unit control sections are enabled to bidirectionally communicate with one another, one of the outdoor unit control sections may acquire information on respective performance coefficient characteristics and capability available ranges of the plurality of outdoor units, and the outdoor units may be assigned higher priorities in descending order of their maximum coefficients of performance (COPs) based on the acquired information, the outdoor units may be sequentially started in descending order of the priorities while each of the outdoor units may be operated in a capability range in which the coefficient of performance of the outdoor unit is higher than the coefficient of performance of the other outdoor unit that is lower in priority than the outdoor unit. Thus, when the plurality of outdoor units are connected, each of the outdoor units can be operated in a highly efficient capability range.

According to a second aspect of the present invention, there is provided a control device according to claim 12, including an outdoor unit control section that is enabled to communicate with an outdoor unit via a communication medium while existing independently of the outdoor unit, and an indoor unit control section that is enabled to communicate with an indoor unit via a communication medium while existing independently of the indoor unit, in which the outdoor unit control section and the indoor unit control section are enabled to bidirectionally communicate with each other, the outdoor unit control section acquires information on equipment provided in the outdoor unit via the communication medium while outputting a control instruction to the equipment provided in the outdoor unit, and the indoor unit control section acquires information on equipment provided in the indoor unit via the communication medium while outputting a control instruction to the equipment provided in the indoor unit.

The aforementioned indoor unit control section and the aforementioned outdoor unit control section are respectively implemented as virtualized control sections.

According to an aspect of the present disclosure, there is provided a heat source system, including a heat utilization device including communication means, a heat source unit that includes communication means, and cools or heats a heating medium utilized in the heat utilization device and supplies the heating medium to the heat utilization device, a heat utilization-side control section that is enabled to communicate with the heat utilization device via a communication medium while existing independently of the heat utilization device, a heat source unit control section that is enabled to communicate with the heat source unit via a communication medium while existing independently of the heat source unit, and a heat source unit higher-level control section that outputs a control instruction to the heat source unit control section in response to a request load from the heat utilization-side control section, in which the heat utilization-side control section and the heat source unit higher-level control section are enabled to bidirectionally communicate with each other and the heat source unit higher-level control section and the heat source unit control section are enabled to bidirectionally communicate with each other, the heat utilization-side control section acquires information on equipment provided in the heat utilization device via the communication medium while outputting a control instruction to the equipment provided in the heat utilization device, and the heat source unit control section acquires information on equipment provided in the corresponding heat source unit via the communication medium while outputting a control instruction to the equipment provided in the heat source unit.

In the aforementioned heat source system, the heat utilization-side control section, the heat source unit higher-level control section, and the heat source unit control section may be respectively implemented as virtualized control sections onto a control device.

According to an aspect of the present disclosure, there is provided a heat source system, including a heat utilization device including communication means, a heat source unit that includes communication means, and cools or heats a heating medium utilized in the heat utilization device and supplies the heating medium to the heat utilization device, a heat utilization-side control section that is enabled to communicate with the heat utilization device via a communication medium while existing independently of the heat utilization device, and a heat source unit control section that is enabled to communicate with the heat source unit via a communication medium while existing independently of the heat source unit, in which the heat utilization-side control section and the heat source unit control section are enabled to bidirectionally communicate with each other, the heat utilization-side control section acquires information on equipment

EP 3 098 533 B1

provided in the heat utilization device via the communication medium while outputting a control instruction to the equipment provided in the heat utilization device, and the heat source unit control section acquires information on equipment provided in the corresponding heat source unit via the communication medium, and outputs a control instruction to the equipment provided in the corresponding heat source unit in response to the acquired information on the equipment and a request load from the heat utilization-side control section.

In the aforementioned heat source system, the heat utilization-side control section and the heat source unit control section may be respectively implemented as virtualized control sections onto a control device.

According to an aspect of the present disclosure, there is provided a control device, including a heat utilization-side control section that is enabled to communicate with a heat utilization device via a communication medium while existing independently of the heat utilization device, a heat source unit control section that is enabled to communicate with a heat source unit via a communication medium while existing independently of the heat source unit, and a heat source unit higher-level control section that outputs a control instruction to the heat source unit control section in response to a request load from the heat utilization-side control section, in which the heat utilization-side control section and the heat source unit higher-level control section are enabled to bidirectionally communicate with each other and the heat source unit higher-level control section and the heat source unit control section are enabled to bidirectionally communicate with each other, the heat utilization-side control section acquires information on equipment provided in the heat utilization device via the communication medium while outputting a control instruction to the equipment provided in the heat utilization device, and the heat source unit control section acquires information on equipment provided in the corresponding heat source unit via the communication medium while outputting a control instruction to the equipment provided in the heat source unit.

In the aforementioned control device, the heat utilization-side control section, the heat source unit control section, and the heat source unit higher-level control section may be respectively implemented as virtualized control sections.

According to an aspect of the present disclosure, there is provided a control device, including a heat utilization-side control section that is enabled to communicate with a heat utilization device via a communication medium while existing independently of the heat utilization device, and a heat source unit control section that is enabled to communicate with a heat source unit via a communication medium while existing independently of the heat source unit, in which the heat utilization-side control section and the heat source unit control section are enabled to bidirectionally communicate with each other, the heat utilization-side control section acquires information on equipment provided in the heat utilization device via the communication medium while outputting a control instruction to the equipment provided in the heat utilization device, and the heat source unit control section acquires information on equipment provided in the corresponding heat source unit via the communication medium while outputting a control instruction to the equipment provided in the corresponding heat source unit in response to the acquired information on the equipment and a request load from the heat utilization-side control section.

In the aforementioned control device, the heat utilization-side control section and the heat source unit control section may be respectively implemented as virtualized control sections.

According to a third aspect of the present invention, there is provided a method, according to claim 13, of controlling an air conditioning system including an indoor unit and an outdoor unit, the control method including causing an indoor unit control section that controls the indoor unit and an outdoor unit control section that controls the outdoor unit to respectively exist independently of the indoor unit and the outdoor unit, and enabling bidirectional communication between the indoor unit control section and the outdoor unit control section while enabling bidirectional communication between the indoor unit control section and the indoor unit and the outdoor unit control section and the outdoor unit.

According to an aspect of the present disclosure, there is provided a method of controlling a heat source system including a heat utilization device, a heat source unit that cools or heats a heating medium utilized in the heat utilization device and outputs the heating medium to the heat utilization device, and a heat source unit higher-level control section that gives a control instruction to the heat source unit in response to a request load from the heat utilization device, the control method including causing a heat utilization-side control section that controls the heat utilization device and a heat source unit control section that gives a control instruction to the heat source unit to respectively exist independently of the heat utilization device and the heat source unit, and enabling bidirectional communication between the heat utilization-side control section and the heat source unit higher-level control section and bidirectional communication between the heat source unit higher-level control section and the heat source unit control section while enabling bidirectional communication between the heat utilization-side control section and the heat utilization device and bidirectional communication between the heat source unit control section and the heat source unit.

According to an aspect of the present disclosure, there is provided a method of controlling a heat source system including a heat utilization device, and a heat source unit that cools or heats a heating medium utilized in the heat utilization device and outputs the heating medium to the heat utilization device, the control method including causing a heat utilization-side control section that controls the heat utilization device and a heat source unit control section that gives a control instruction to the heat source unit to respectively exist independently of the heat utilization device and the heat source unit, and enabling bidirectional communication between the heat utilization-side control section and the heat source unit control section while enabling bidirectional communication between the heat utilization-side control section and the heat utilization device and bidirectional communication between the heat source unit control section and the heat source unit.

{Advantageous Effects of Invention}

According to the present invention, respective cost reductions of a single outdoor unit and a single indoor unit can be implemented while the system can be easily upgraded.

{Brief Description of Drawings}

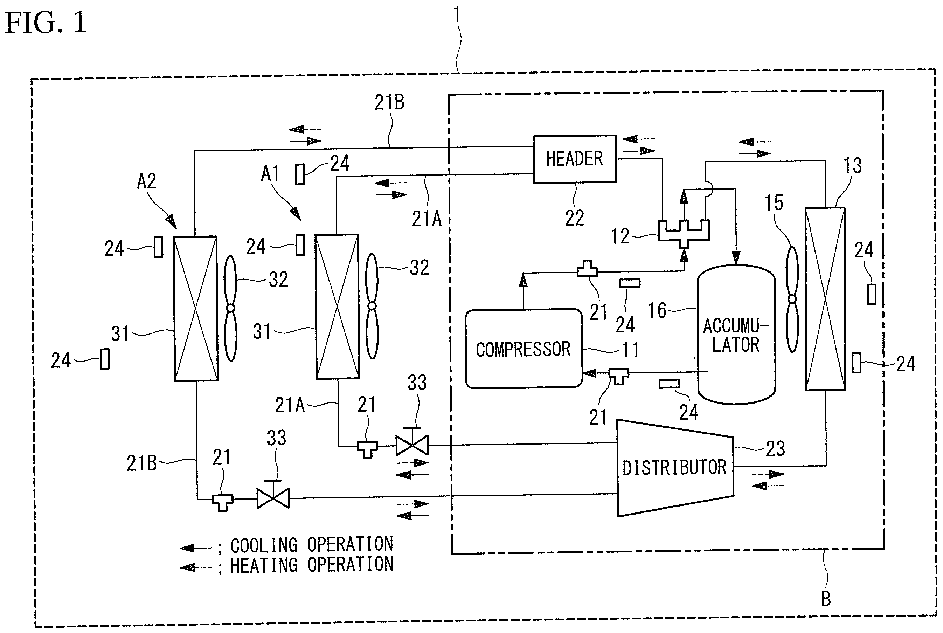

{Fig. 1}
Fig. 1 is a diagram illustrating a cooling medium system in an air conditioning system according to an embodiment of the present invention.
{Fig. 2}
Fig. 2 is an electrical configuration diagram of the air conditioning system according to the embodiment of the present invention.
{Fig. 3}
Fig. 3 is a diagram illustrating an example of a hierarchical structure for communication of the air conditioning system according to the embodiment of the present invention.
{Fig. 4}
Fig. 4 is a flowchart illustrating a processing procedure at the time of startup of a control device.
{Fig. 5}
Fig. 5 is a flowchart illustrating a processing procedure at the time of restart of the control device.
{Fig. 6}
Fig. 6 is a flowchart illustrating a processing procedure performed when a connection equipment has been changed by adding, changing, and removing an indoor unit or an outdoor unit.
{Fig. 7}
Fig. 7 is a flowchart illustrating a processing procedure performed when a control module or the like has been updated.
{Fig. 8}
Fig. 8 is a diagram illustrating one configuration example of an air conditioning system when a plurality of control devices are connected thereto.
{Fig. 9}
Fig. 9 is a flowchart illustrating a processing procedure at the time of startup when the plurality of control devices are connected to a common bus.
{Fig. 10}
Fig. 10 is a flowchart illustrating a processing procedure for a case where an existing control device is switched to a new control device.
{Fig. 11}
Fig. 11 is a diagram illustrating one configuration example of an air conditioning system when a plurality of outdoor units are respectively connected as connection equipment.
{Fig. 12}
Fig. 12 is a diagram illustrating the definition of parameters used for a control rule table.
{Fig. 13}
Fig. 13 is a diagram for illustrating one example of a control rule table.
{Fig. 14}
Fig. 14 is a diagram illustrating an example of an operation capability distribution table.
{Fig. 15}
Fig. 15 is a diagram illustrating a cooling medium system in a heat source system according to the embodiment of the present invention.
{Fig. 16}
Fig. 16 is an electrical configuration diagram of a heat source system according to the embodiment of the present invention.

{Description of Embodiments}

An air conditioning system according to an embodiment of the present invention and a method of controlling the same will be described below with reference to the drawings.

Fig. 1 is a diagram illustrating a cooling medium system in an air conditioning system 1 according to the present embodiment. As illustrated in Fig. 1, the air conditioning system 1 includes one outdoor unit B and a plurality of indoor units A1 and A2 connected to the outdoor unit B via a common cooling medium piping. While a configuration in which two indoor units A1 and A2 are connected to one outdoor unit B is illustrated for convenience in Fig. 1, the number of outdoor units to be installed and the number of indoor units to be connected thereto are not limited.

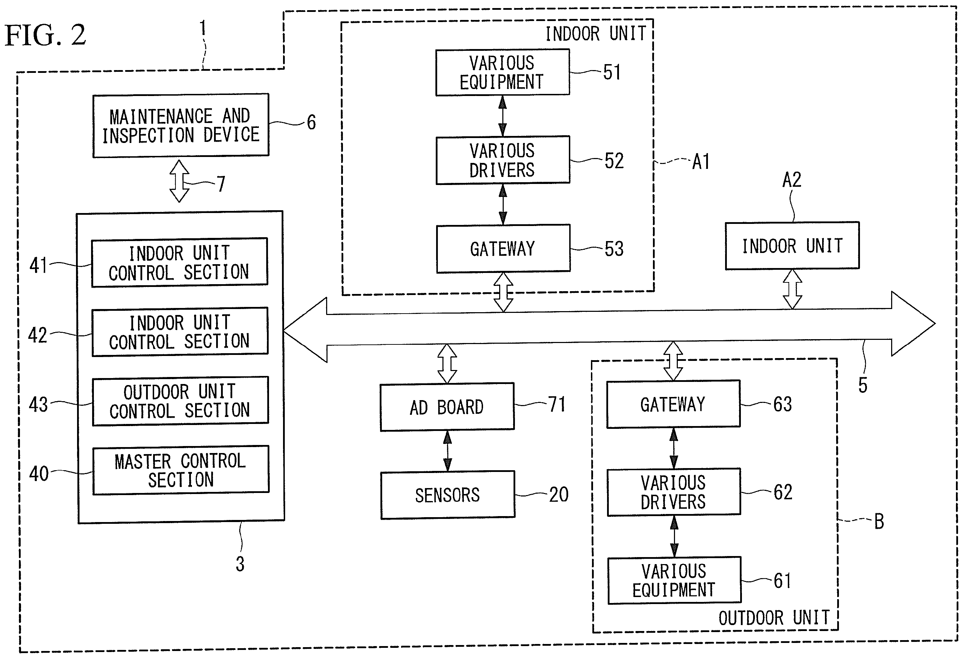

The outdoor unit B includes a compressor 11 that compresses and sends out a cooling medium, a four-way valve 12 that switches a circulation direction of the cooling medium, an outdoor heat exchanger 13 that exchanges heat between the cooling medium and external air, an outdoor fan 15, an accumulator 16 provided in an intake-side piping of the compressor 11 for the purpose of gas-liquid separation of the cooling medium, for example. Various sensors 20 (see Fig. 2) such as a pressure sensor 21 that measures cooling medium pressure and a temperature sensor 24 that measures cooling medium temperature or the like are provided in the outdoor unit B.

Each of the indoor units A1 and A2 includes an indoor heat exchanger 31, an indoor fan 32, an electronic expansion valve 33, and the like. The two indoor units A1 and A2 are respectively connected to cooling medium pipings 21A and 21B that branch from each of a header 22 and a distributor 23 in the outdoor unit B.

Fig. 2 is an electrical configuration diagram of the air conditioning system 1 according to the present embodiment. As illustrated in Fig. 2, the indoor units A1 and A2, the outdoor unit B, and a control device 3 are connected to one another via a common bus 5, and is adapted to be able to give and accept information to and from one another. The common bus 5 is one example of a communication medium irrespective of whether communication is wireless or wired.

The control device 3 is connected to a maintenance and inspection device 6, which performs maintenance and inspection, via a communication medium 7, and is adapted to be able to periodically transmit operation data and quickly notify, when an abnormality has occurred, the occurrence of the abnormality.

In the conventional air conditioning system, control devices are respectively provided inside the indoor unit control section and the outdoor unit control section, as illustrated in PTL 1. On the other hand, in the present embodiment, indoor unit control sections 41 and 42 and an outdoor unit control section 43 are respectively provided independently of the indoor units A1 and A2 and the outdoor unit B. More specifically, the indoor unit control section 41 that controls the indoor unit A1, the indoor unit control section 42 that controls the indoor unit A2, and the outdoor unit control section 43 that controls the outdoor unit B are respectively mounted as virtualized control sections on the control device 3.

That is, the indoor unit control sections 41 and 42 and the outdoor unit control section 43 are consolidated into the control device 3 having one piece of hardware, and are made independently operable on the hardware of the control device 3. The control device 3 includes a master control section 40 for causing the indoor unit control sections 41 and 42 and the outdoor unit control section 43 to virtually exist in the control device. Processing for creating the indoor unit control sections 41 and 42 and the outdoor unit control section 43 by the master control section 40, for example, will be described below.

In the control device 3, the indoor unit control sections 41 and 42 and the outdoor unit control section 43 are adapted to be able to give and accept information to and from each other. The indoor unit control sections 41 and 42 and the outdoor unit control section 43 may respectively perform autonomous distributed controls to be independently implemented while sharing information, for example. Here, the autonomous distributed control means that the control section receives information from the sensors 20 and the other control section (e.g., the indoor unit control section 42 and the outdoor unit control section 43 correspond to the other control section if the control section is the indoor unit control section 41) and a predetermined application follows a control rule using the information as an input to issue a control instruction to the corresponding indoor unit or outdoor unit (e.g., the indoor unit A1 if the control section is the indoor unit control section 41).

In the indoor unit A1, various drivers 52 respectively provided to correspond to various types of equipment 51 such as the indoor fan 32 and the electronic expansion valve 33 (see Fig. 1) are connected to the common bus 5 via a gateway (communication means) 53. The indoor unit A2 also has a similar configuration to that of the indoor unit A1, although illustration thereof is omitted.

In the outdoor unit B, various drivers 62 respectively provided to correspond to various types of equipment 61 such as the compressor 11, the four-way valve 12, and the outdoor fan 15 (see Fig. 1) are connected to the common bus 5 via a gateway (communication means) 63.

Each of the gateways 53 and 63 is a gathering of functions including a communication driver, an address storage region, an equipment attribute storage region, an OS (Operating System), and a communication framework, for example. The address storage region is a storage region for storing a specific address previously allocated to communicate with the control device 3 or the like. The equipment attribute storage region is a region for storing its own attribute information and attribute information on the retained equipment 51 or 61, and stores information such as either an indoor unit or an outdoor unit, a capability, on-board sensors (e.g., a temperature sensor, a pressure sensor, etc.), and equipment information (e.g., the number of taps of a fan, a full pulse of a valve, etc.).

Furthermore, the sensors 20 (e.g., a pressure sensor that measures cooling medium pressure, a temperature sensor that measures cooling medium temperature, etc.) provided in each of the outdoor unit B and the indoor units A1 and A2 are connected to the common bus 5 via an AD (Analog/Digital) board 71. If the measurement accuracy of the sensors 20 is low, a node having a correction function for correcting a measurement value may be provided between the AD board 71 and the sensors 20. Thus, a sensor, which is low in cost and is not so high in measurement accuracy, can be used as the sensors 20 by being made to have the correction function.

In this air conditioning system, each of the indoor unit control section 41 and 42 in the control device 3 acquires measurement data and control information from the sensors 20 and the various drivers 52 and 62 via the common bus 5, and outputs a control instruction to the various types of equipment (e.g., the indoor fans 32, the electronic expansion valves 33, etc.) provided in the indoor unit A1 or A2 by executing a predetermined indoor unit control program based on the measurement data, for example. The control instruction is sent to the various drivers 52 via the common bus 5 and the gateway 53. The various drivers 52 drive the respectively corresponding equipment based on the received control instruction. Thus, control of the indoor units A1 and A2 based on the control instructions is implemented.

Similarly, the outdoor unit control section 43 in the control device 3 acquires measurement data and control information from the sensors 20 and the various drivers 52 and 62 via the common bus 5, and outputs a control instruction to the various types of equipment (e.g., the compressor 11, the four-way valve 12, the outdoor heat exchanger 13, the outdoor fan 15, etc.) provided in the outdoor unit B by executing a predetermined outdoor unit control program based on the measurement data. The control instruction is sent to the various drivers 62 via the common bus 5 and the gateway 63. The various drivers 62 drive the respectively corresponding equipment based on the received control instruction.

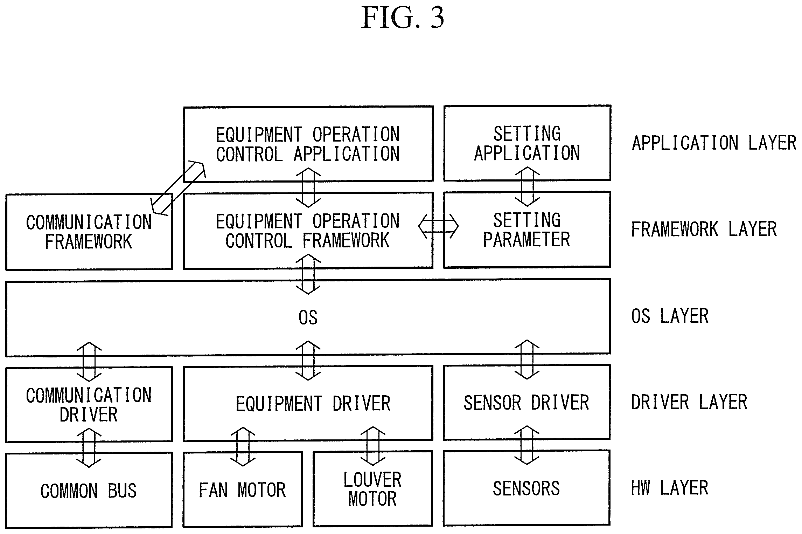

Fig. 3 illustrates an example of a hierarchical structure for communication of the air conditioning system 1. As illustrated in Fig. 3, the air conditioning system 1 has a hardware layer (hereinafter referred to as an "HW layer"), a driver layer, an operation system layer (hereinafter referred to as an "OS" layer), a framework layer, and an application layer.

The HW layer has a common bus, a fan motor, a louver motor, and sensors. The driver layer has a communication driver for communication via the common bus 5, an equipment driver for driving the fan motor, the louver motor, and the like, and a sensor driver for driving the sensors. Particularly, communication among the control device 3, the indoor units A1 and A2, and the outdoor unit A3 is performed using a driver layer (information defined by the driver layer). Therefore, an amount of each information to be communicated via the common bus 5 can be made smaller than that when communication is performed using the application layer or the framework layer.

The framework layer has a communication framework, an equipment operation control framework, and a setting parameter. The framework layer converts a physical unit and a control unit of an actual equipment, for example. For example, the conversion is performed so that a physical unit such as 1 % valve opening corresponds to 12 pulses of a stepping motor.

The application layer has a function of operating equipment in the indoor unit A1 according to an instruction from the common bus 5 and sending out equipment failure information, and mainly has an equipment operation control application and a setting application. For example, the equipment operation control application is a program relating to control of the various types of equipment (e.g., the indoor heat exchanger 31, the indoor fan 32, the electronic expansion valve 33, etc.) constituting the indoor unit A1, e.g., a program for performing control relating to the start and the stop of the indoor unit A1, and change of a state such as an operation mode or a set temperature.

For the indoor units A1 and A2 and the outdoor unit B, autonomous distributed controls may be respectively performed by the indoor unit control sections 41 and 42 and the outdoor unit control section 43. In this case, a control rule is set between the indoor units A1 and A2 and the outdoor unit B, and each of the indoor units A1 and A2 and the outdoor unit B performs the control according to this control rule. For example, when cooling medium pressure is taken as an example, the indoor units A1 and A2 respectively determine, if cooling medium pressure acquired from the sensors 20 is within a predetermined first allowable variation range, control instructions for matching an actual temperature and an actual air volume with a set temperature and a set air volume, which have been set by a user or the like, and output the control instructions to the indoor units A1 and A2 via the common bus 5. The indoor unit control sections 41 and 42 may respectively determine control instructions by giving and accepting information to and from each other to cooperate with each other. The outdoor unit control section 43 determines an output instruction from the air conditioning system 1 for maintaining the cooling medium pressure within a predetermined second allowable variation range, e.g., a control instruction relating to a rotation number of the compressor 11, a rotation speed of the outdoor fan 15, and the like, and transmits the determined output instruction to the outdoor unit B via the common bus 5.

When the first allowable variation range is set wider than the second allowable variation range, for example, the outdoor unit control section 43 can grasp output change information on the indoor units A1 and A2 and determine a behavior of the outdoor unit B.

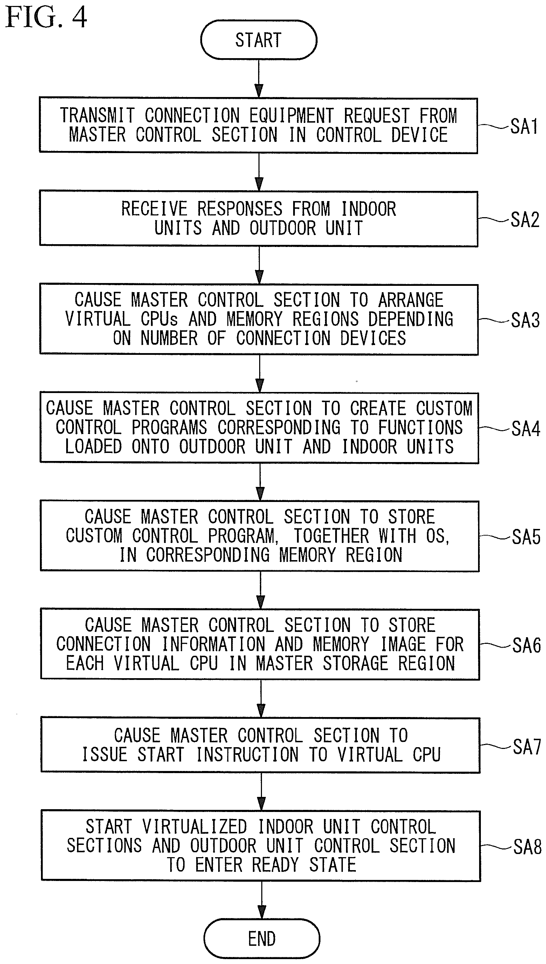

Various types of processing performed by the control device 3 will be described below with reference to Figs. 4 to 10.

Fig. 4 is a flowchart illustrating a processing procedure performed by the control device 3 at the time of startup of the air conditioning system. First, at the time of startup of the air conditioning system 1, the master control section 40 in the control device 3 is first started. The startup of the master control section 40 is implemented when the CPU in the control device 3 executes a program. Here, the master control section 40 is also a control section virtually created in the control device 3. The master control section 40 transmits a connection equipment request (step SA1 illustrated in Fig. 4). Thus, the connection equipment request is transmitted to each of connection equipment via the common bus 5. The gateway 53 in each of the indoor units A1 and A2 and the gateway 63 in the outdoor unit B, which have received the connection equipment request, read out attribute information from an equipment attribute storage region while reading out address information from an address storage region, associates the information, and return the information to the control device 3 (step SA2).

Thus, the master control section 40 acquires connection of the indoor units A1 and A2 and the outdoor unit B as the connection equipment, and the equipment provided in each of the indoor units A1 and A2 and the outdoor unit B and address information thereon.

The master control section 40 grasps the number of pieces of connection equipment based on the received attribute information, and arranges virtual CPUs and memory regions depending on the number of pieces of connection equipment (step SA3). Thus, in the control device 3, each of the indoor units A1 and A2 and the outdoor unit B is assigned the virtual CPU and the memory region corresponding thereto. Then, the master control section 40 acquires a control module corresponding to each of the attribute information from a control module storage section (not illustrated), and creates custom control programs respectively corresponding to the indoor units A1 and A2 and the outdoor unit B (step SA4).

Here, the control module is a control program provided to correspond to each of a plurality of pieces of equipment (e.g., a fan, an expansion valve, a compressor, etc.) provided in each of the indoor units A1 and A2 and the outdoor unit B. Thus, when the custom control program is created in a control module unit, the custom control program can be customized depending on the equipment provided ineach of the indoor units A1 and A2 and the outdoor unit B. Thus, the custom control program can be created with the minimum necessary number of control modules so that a memory capacity can be reduced.

Instead of creating the custom control program in a control module unit, as described above, a general-purpose control program for an indoor unit and a general-purpose control program for an outdoor unit may be prepared and used as they are.

The control module storage section may be provided in the control device 3, or may be provided on a server connected via a network. When downloaded from an external server, resources of the control device 3 can be effectively used.

The master control section 40 stores, when it creates the custom control programs respectively corresponding to the indoor units A1 and A2 and the outdoor unit B, the created custom control programs in the memory regions previously arranged (step SA5). Then, the master control section 40 stores a memory image and connection equipment information stored in each of the memory regions in a master storage region (not illustrated) (step SA6). This is for quickly performing the second and subsequent startups. Then, the master control section 40 issues a start instruction to each of the virtual CPUs (step SA7). Thus, when the virtual CPUs respectively execute the custom control programs stored in the corresponding memory regions, the indoor unit control sections 41 and 42 and the outdoor unit control section 43 are started to enter a ready state (step SA8). That is, the indoor unit control sections 41 and 42 and the outdoor unit control section 43 are created in the control device 3 when the respective virtual CPUs execute the custom control programs stored in the corresponding storage regions.

Thus, control of the indoor units A1 and A2 by the indoor unit control sections 41 and 42 and control of the outdoor unit B by the outdoor unit control section 43 are implemented. After the indoor unit control sections 41 and 42 and the outdoor unit control section 43 are started, the master control section 40 may be brought into a stop state or deleted. When the master control section 40 is deleted, the CPU capability of the master control section 40 can be reduced to zero so that compression of other resources can be avoided.

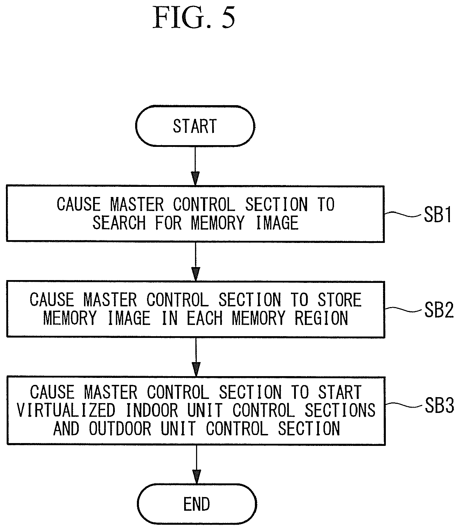

A processing procedure at the time of restart of the control device 3 will be described below with reference to Fig. 5. In this case, the master control section 40 is started, to start to search for memory images in the master storage region (step SB1 illustrated in Fig. 5), like in the foregoing. As a result, if there are no memory images, processes in step SA2 and the subsequent steps, described above, are performed so that each of the indoor unit control sections 41 and 42 and the outdoor unit control section 43 is created. On the other hand, if memory images are stored in the master storage region, the memory images are read out by the master control section 40, and are respectively stored in the memory regions in the virtual CPUs (step SB2). Then, when start instructions are respectively output to the virtual CPUs, and the virtual CPUs respectively execute the custom control programs written into the memory regions, the indoor unit control sections 41 and 42 and the outdoor unit control section 43 are started (step SB3).

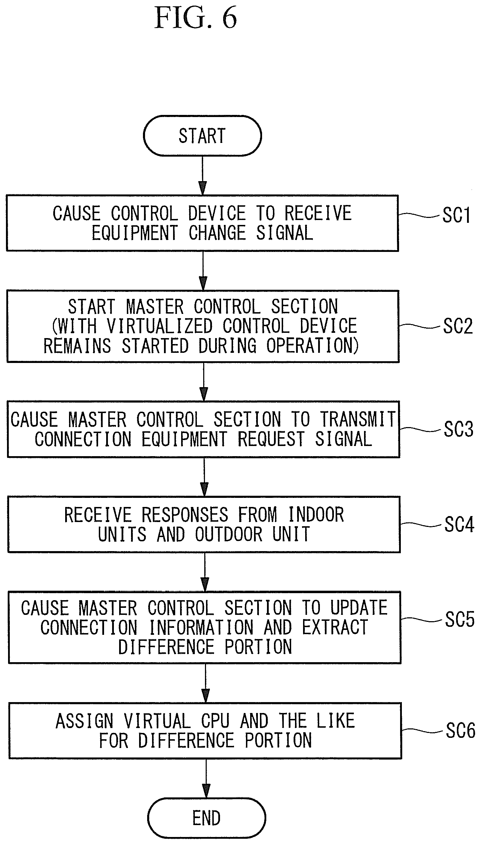

A processing procedure performed when connection equipment has been changed by adding, changing, or removing an indoor unit or an outdoor unit, for example, will be described below with reference to Fig. 6.

In this case, an equipment change signal is input to the control device 3. The equipment change signal may be manually input, or may be automatically input to the control device 3 via the common bus 5 when any change has occurred. When the equipment change signal has been received (step SC1 illustrated in Fig. 6), the master control section 40 is started (step SC2), and the master control section 40 transmits a connection equipment request via the common bus 5 (step SC3). The gateway in the connection equipment, which has received the connection equipment request, returns attribute information and address information to the control device 3 (step SC4). The master control section 40 compares, when it receives the information, the connection equipment information stored in the master storage region with connection equipment information newly received, to extract difference information (step SC5). A virtual CPU or the like is assigned for the difference information (step SC6). Thus, when an indoor unit is newly added, for example, an indoor unit control section corresponding to the added indoor unit is created. Thus, when processing is performed only for the difference information, a processing burden and a processing time can be reduced.

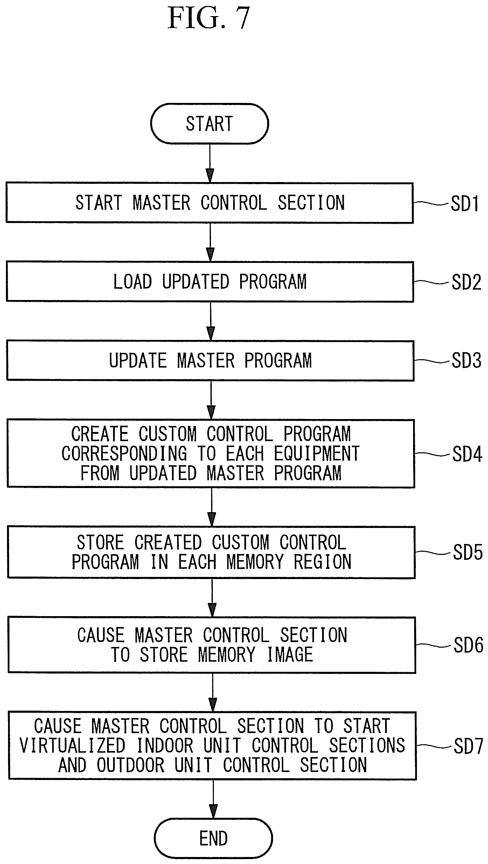

A processing procedure performed when a control module or the like has been updated will be described below with reference to Fig. 7. When a program update signal for notifying a program update is input to the control device 3, the master control section 40 is started (step SD1). Then, the master control section 40 updates a master program, in other words, updates each of control modules. If a control module storage section is provided in the control device 3, for example, the control module after the update is loaded from a predetermined server or the like (step SD2), and is written into the control module storage section, the control module is updated (step SD3). Then, the custom control programs respectively corresponding to the indoor unit control sections 41 and 42 and the outdoor unit control section 43 are re-created using the control module after the update that has been stored in the control module storage section (step SD4). Then, the re-created custom control programs corresponding to the indoor unit control sections 41 and 42 and the outdoor unit control section 43 are updated by being respectively written into the memory regions (step SD5). A memory image in each of the memory regions is stored in the master storage section (step SD6), and each of the indoor unit control sections 41 and 42 and the outdoor unit control section 43 is started (step SD7).

When the control module storage section is provided on a predetermined server, the custom control program corresponding to each of the indoor unit control sections 41 and 42 and the outdoor unit control section 43 may be re-created by loading the desired control module from the control module storage section that has already been updated.

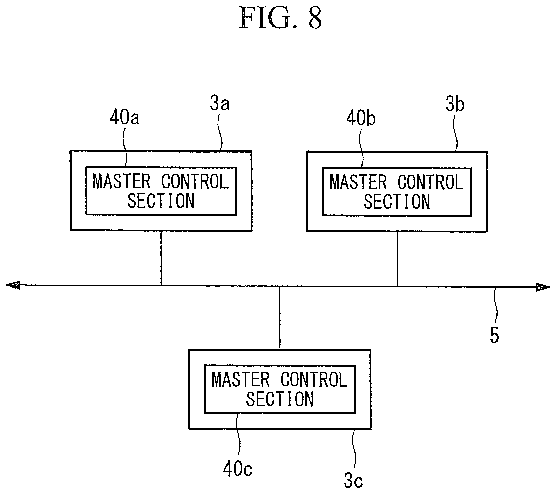

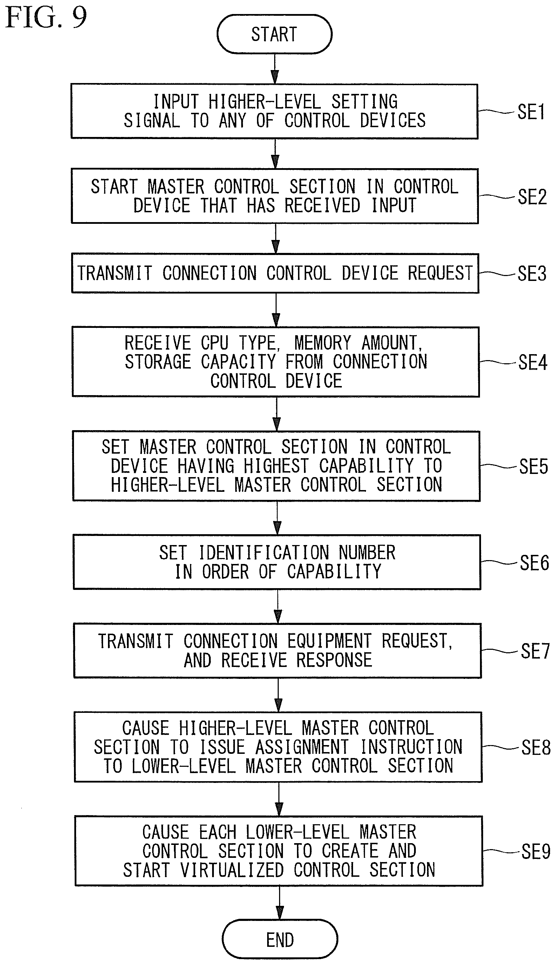

As illustrated in Fig. 8, a processing procedure at the time of startup performed when a plurality of control devices 3 (3a to 3c) are connected to a common bus 5, as illustrated in Fig. 8, will be described below with reference to Fig. 9. The following processing procedure is executed not only at the time of startup but also when a control device 3 is added.

First, when a higher-level setting signal is input to any one of the control devices, e.g., the control device 3a (step SE1 illustrated in Fig. 9), a master control section 40a in the control device 3a, which has received the input, is started (step SE2). Here, the higher-level setting signal is manually input by operating a predetermined button provided in the control device 3, for example. Alternatively, the higher-level setting signal may be a signal to be transmitted to any one of the control devices 3 from a predetermined device via a common bus.

The master control section 40a in the control device 3a, which has received the higher-level setting signal, transmits a connection control device request via the common bus 5 (step SE3). Thus, each of the control devices 3b and 3c, which have received the connection control device request, returns a CPU type, a memory amount, and a storage capacity to the master control section 40a (step SE4). The master control section 40a outputs the higher-level control signal to the control device having the highest capability, e.g., the control device 3c based on the received information (step SE5). Thus, a master control section 40c in the control device 3c having the highest capability operates as a higher-level master control section. The higher-level master control section respectively sets identification numbers in the respective master control sections 40a to 40c in the control devices (step SE6).

For example, "0", "1", and "2" are respectively set in the master control section 40c itself serving as the higher-level master control section, the master control section 40a, and the master control section 40b. Then, the master control section 40c transmits a connection equipment request, and grasps connection equipment (step SE7). This process is similar to those in steps SA1 and SA2 illustrated in Fig. 4, described above. The master control section 40c respectively assigns control sections to the control devices 3a to 3c depending on the number of pieces of connection equipment and the capabilities of the control devices 3a to 3c, and associates and stores respective identification information in the master control sections and information on the assigned control sections. A predetermined algorithm is prepared for the assignment, and the assignment is performed according to the algorithm.

The master control section 40c transmits, to the master control sections 40a and 40b assigned to the control devices, attribute information and address information on the assigned control sections (step SE8). Each of the master control sections 40a and 40b arranges a virtual CPU and a memory space, creates an indoor unit control section or an outdoor unit control section, and starts the created indoor unit control section or outdoor unit control section based on the received attribute information and address information (step SE9). This process is similar to those in steps SA3 to SA8 illustrated in Fig. 4.

When the plurality of control devices 3 (3a to 3c) are thus connected, the master control section 40c in the control device 3c having the highest capability functions as a higher-level master control section, and respectively assigns the control sections to the lower-level master control sections 40a and 40b. Virtual control sections in the control devices 3 are respectively created by the master control sections 40a to 40c. This enables, even when the plurality of control devices 3 are connected, the virtual control sections to be easily and efficiently created.

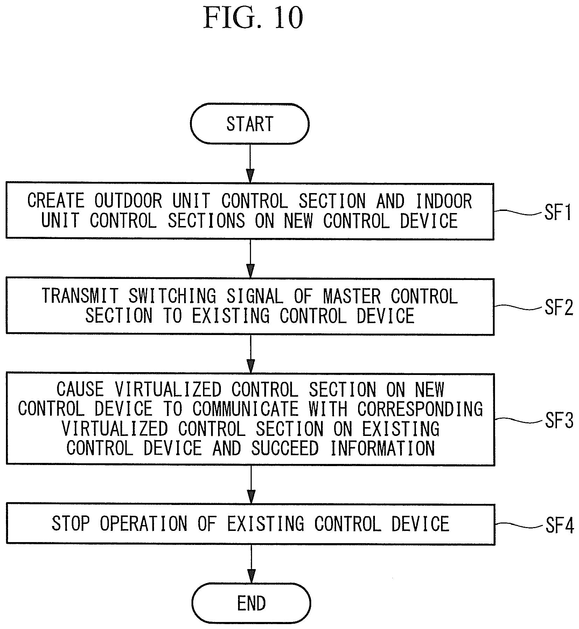

A processing procedure for a case where the existing control device 3 is switched to a new control device 3 will be described below with reference to Fig. 10. In this case, when the new control device 3 is first connected to the common bus 5, and processes in steps SA1 to SA8 illustrated in Fig. 4 are performed, the indoor unit control sections 41 and 42 and the outdoor unit control section 43 are created in the new control device 3 (step SF1 illustrated in Fig. 10). Then, a master control section in the new control device 3 transmits a switching signal for the master control section to the existing control device (step SF2). Then, indoor unit control sections 41 and 42 and an outdoor unit control section 43 in the new control device 3 respectively access the indoor unit control sections 41 and 42 and the outdoor unit control section 43 on the existing control device 3, and copy information stored in the respective memory regions, to succeed information (step SF3). After the information has been succeeded, the indoor unit control sections 41 and 42 and the outdoor unit control section 43 on the new control device 3 continue to perform control while the existing control device 3 stops operating (step SF4).

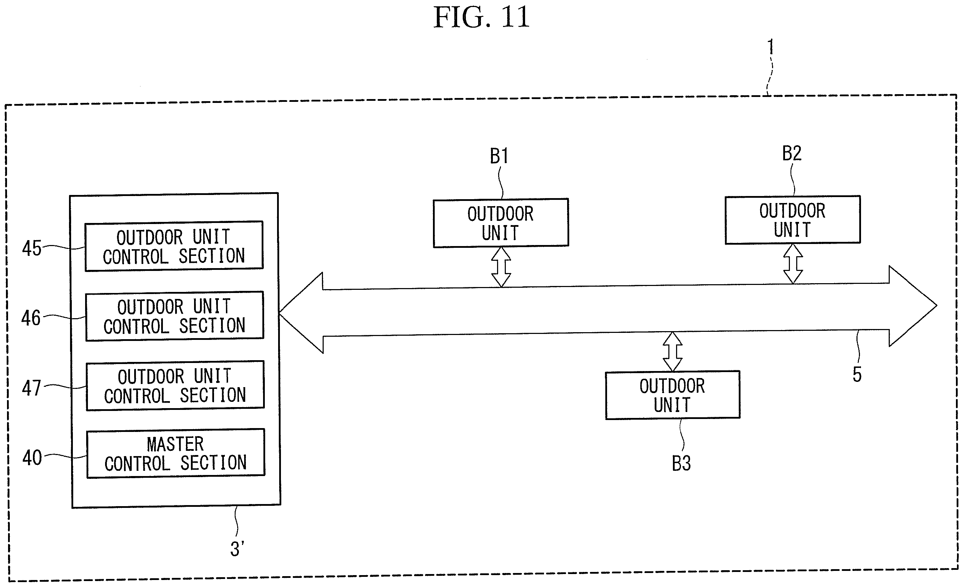

As illustrated in Fig. 11, a processing procedure relating to load allocation of a plurality of outdoor units B1 to B3 when the outdoor units B1 to B3 are respectively connected as connection equipment and outdoor unit control sections 45 to 47 respectively corresponding to the outdoor units B1 to B3 are provided in a control device 3' will be described below with reference to Figs. 11 to 13. While indoor units, sensors, and the like are connected, like in Fig. 2, indoor unit control sections respectively corresponding to the devices and the indoor units are not illustrated in Fig. 11.

The outdoor unit control sections 45 to 47 respectively retain COP characteristics and capability ranges of the outdoor units B1 to B3. The information can be retained when information stored in attribute information storage regions of gateways in the outdoor units B1 to B3 are received.

Each of the outdoor unit control sections 45 to 47 transmits and receives information on the COP characteristic and an outputtable capability to and from the other outdoor unit control sections, to also share information for capabilities of the other outdoor units. Then, any one of the outdoor unit control sections is set as a higher-level outdoor unit control section. For example, the higher-level outdoor unit control section may be an outdoor unit control section first created or may be an outdoor unit control section corresponding to the outdoor unit having the highest maximum COP. A case where the outdoor unit control section 45 functions as a higher-level outdoor unit control section will be herein described for convenience of illustration.

The higher-level outdoor unit control section 45 then creates an operation capability distribution table based on the COP characteristic and the maximum COP of each of the outdoor units B1 to B3 and a control rule table previously registered.

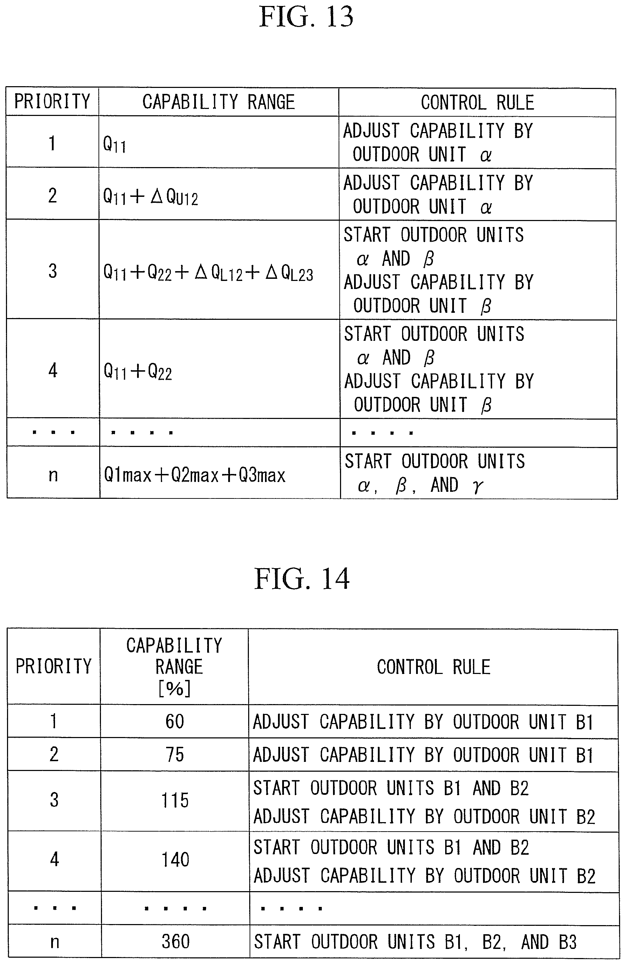

The control rule table will be first described with reference to Fig. 13.

The control rule table is a table in which respective operation rules of the outdoor units B1 to B3 are defined in descending order of efficiencies of operations of the outdoor units and in ascending order of numbers of the started outdoor units, as illustrated in Fig. 13. While a case where three outdoor units are connected has been herein described, control rule tables may be respectively previously prepared depending on the number of outdoor units, e.g., two or four and stored in predetermined storage regions of the control device 3', and the control rule tables may be referred to depending on the number of outdoor units connected from time to time.

An operation rule table may be created each time from the number of outdoor units acquired by communication by not previously preparing control rule tables but storing an algorithm for creating the control rule tables in a predetermined storage region of the control device 3'.

When there are three outdoor units $\alpha$, $\beta$, and $\gamma$, and the maximum COP of the outdoor unit $\alpha$, the maximum COP of the outdoor unit $\beta$, and the maximum COP of the outdoor unit $\gamma$ are respectively COP1max, COP2max, and COP3max, for example, the following inequality expression is considered to hold. The COP4 is a target minimum COP, and is a lower-limit of a COP with which the outdoor unit is to operate.

COP1max > COP2max > COP3max > COP4

Capabilities (load factors) are respectively defined as Q11, Q22, and Q33 when the outdoor units $\alpha$, $\beta$, and $\beta$ take COP1max, COP1max, and COP3max.

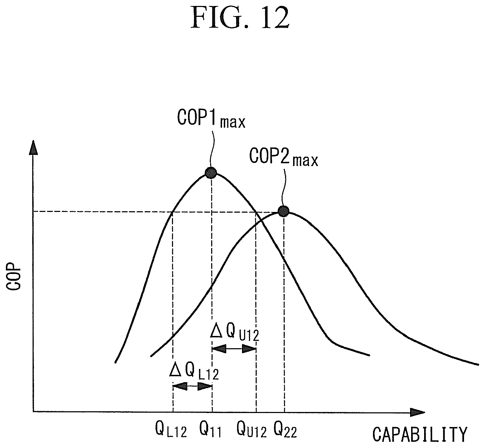

As illustrated in Fig. 12, a capability range $Q_{L12} \le Q \le Q_{U12}$ in which the COP of the outdoor unit $\alpha$ is larger than the maximum COP of the outdoor unit $\beta$ is then specified, as illustrated in Fig. 12. Among indexes of Q, L indicates a lower-limit value, and U indicates an upper-limit value. In $Q_{ij}$, i indicates a number of the outdoor unit serving as a reference, and j indicates a number of the outdoor unit to be compared. The outdoor unit $\alpha$ is indicated by a number "1", the outdoor unit $\beta$ is indicated by a number "2", and the outdoor unit $\gamma$ is indicated by a number "3". That is, $Q_{L12}$ indicates a lower-limit value of a capability range in which a COP characteristic of the outdoor unit $\alpha$ takes a value higher than the maximum COP of the outdoor unit $\beta$, as illustrated in Fig. 13.

Parameters $Q_{L13}$, $Q_{L14}$, $Q_{L23}$, $Q_{L34}$, and the like indicated by the following matrices (1) and (2) are defined in

a similar method:

$$\begin{bmatrix} Q_{11} & Q_{12L} & Q_{13L} & Q_{14L} \\ & Q_{22} & Q_{23L} & Q_{24L} \\ & & Q_{33} & Q_{34L} \\ & & & Q_{44} \end{bmatrix} \quad (1)$$

$$\begin{bmatrix} Q_{11} & Q_{12U} & Q_{13U} & Q_{14U} \\ & Q_{22} & Q_{23U} & Q_{24U} \\ & & Q_{33} & Q_{34U} \\ & & & Q_{44} \end{bmatrix} \quad (2)$$

Capability ranges among the respective maximum COPs of the outdoor units are defined as below:

$$\Delta Q_{Uij} = Q_{Uij} - Q_{ii} \quad (3)$$

$$\Delta Q_{Lij} = Q_{Lij} - Q_{ii} \quad (4)$$

Here, $\Delta Q_{Uij}$ expressed by the equation (3) is a positive value, and $\Delta Q_{Lij}$ expressed by the equation (4) is a negative value. For example, $\Delta Q_{U12} = Q_{U12} - Q_{11}$ and $\Delta Q_{L12} = Q_{L12} - Q_{11}$ are respectively capability ranges illustrated in Fig. 12.

When the capability ranges are defined as above, if ranges in which the outdoor unit can operate with the COP higher than that of the other outdoor unit are gradually extracted, a control rule table as illustrated in Fig. 13 is obtained.

A term including an index L given by the foregoing equation (4) is a negative value. Therefore, the respective operation rules of the outdoor units $\alpha$, $\beta$, and $\gamma$ illustrated in Fig. 13 are not necessarily illustrated in descending order of their capabilities depending on COP characteristics of the outdoor units.

The higher-level outdoor unit control section 45 replaces, when it acquires information on respective COP characteristics, maximum COPs, and capabilities of the outdoor units B1, B2, and B3, the outdoor units B1, B2, and B3 with outdoor units $\alpha$, $\beta$, and $\gamma$ in descending order of the maximum COPs, and calculates respective values of parameters Qii and Qii, and then respective values of $\Delta Q_{Uij}$ and $\Delta Q_{Lij}$ in the aforementioned procedure. The respective calculated values of the parameters are substituted into an arithmetic expression for each of priorities in the control rule table illustrated in Fig. 13, to calculate a capability corresponding to the priority. Thus, an operation capability distribution table customized to the outdoor units B1, B2, and B3 is created. An example of the operation capability distribution table customized to the outdoor units B1, B2, and B3 is illustrated in Fig. 14. Fig. 14 illustrates an example of a case where the respective maximum COPs of the outdoor units B1, B2, and B3 decrease in this order, i.e., a case where the outdoor units B1, B2, and B3 are respectively set as the outdoor units $\alpha$, $\beta$, and $\gamma$.

The higher-level outdoor unit control section 45 distributes loads among the outdoor units B1, B2, and B3 using this operation capability distribution table. When a request load factor is 100 [%], for example, the highest priority, which covers the request load factor, is the third priority, i.e., 115 [%]. Therefore, the higher-level outdoor unit control section 45 assigns Q11 (e.g., 60 [%]) corresponding to the maximum COP to the outdoor unit B1 and assigns the remaining 40 [%] to the outdoor unit B2. The outdoor unit control section 45 itself controls the outdoor unit B1 with a load factor of 60 % while outputting information on a load factor of 40 [%] to the outdoor unit control section 46 corresponding to the outdoor unit B2 and outputting information on an operation stop to the outdoor unit control section 47. Thus, the outdoor unit B2 is operated with a load factor of 40 [%], and the outdoor unit B3 is brought into an operation stop state.

Thus, the outdoor units can be efficiently operated by being preferentially started in descending order of their maximum COPs. Each of the outdoor units is operated in a capability range in which the COP thereof is higher than those of the other outdoor units that are lower in priority than the outdoor unit. Thus, a highly efficient operation can be implemented.

In an operation according to the aforementioned operation capability distribution table, an operating time of the outdoor unit having a high maximum COP tends to be longer than those of the other outdoor units. Therefore, when respective accumulated operating times of the outdoor units B1 to B3 are monitored, and a difference, which is not less than a predetermined value, has occurred between the accumulated operating times of the outdoor units, the outdoor unit having a long accumulated operating time may be forcedly stopped, and the other outdoor units may be proportionally burdened with the capability of the stopped outdoor unit. A case where the outdoor unit having a long accumulated operating time is forcedly stopped is limited to a case where a request load is covered by the capabilities of the other outdoor units.

While the control rule table and the operation capability distribution table are created using both the lower-limit value and the upper-limit value in the aforementioned example, either one of the lower-limit value and the upper-limit value may be used. When either one of the lower-limit value and the high-limit value is thus used, the priority and the capability are not reversed, and the number of calculations is reduced so that a processing burden is also reduced.

While the higher-level outdoor unit control section 45 creates the operation capability distribution table, and the respective capabilities of the outdoor units are allocated according to the operation capability distribution table in the aforementioned example, the outdoor unit control sections 45 to 47 may respectively create operation capability distribution tables and determine their own load allocations based on the created operation capability distribution tables when the outdoor unit control sections 46 and 47 respectively have similar functions to that of the aforementioned higher-level outdoor unit control section 45, for example. In this case, both the operation capability distribution tables are creased based on the same algorithm. Therefore, the operation capability distribution tables respectively created by the outdoor unit control sections 45 to 37 are made the same.

As described above, according to the air conditioning system 1 according to the present embodiment and a method of controlling the same, the indoor unit control sections 41 and 42 and the outdoor unit control section 43 are consolidated into the control device 3 while being respectively created as the virtualized control sections. Thus, each of the indoor units A1 and A2 and the outdoor unit B need not be provided with a control section (excluding a CPU serving as a driver for driving various types of equipment). Therefore, respective configurations of the indoor units A1 and A2 and the outdoor unit B can be simplified. As a result, reduction in cost can be implemented. Further, the indoor units A1 and A2 and the outdoor unit B need not be respectively implemented with advanced programs. Therefore, the equipment does not become obsolete. Moreover, a partial update (replacement) is enabled. Further, the control device 3 can reflect, when it updates a program used as a base of an implemented program, i.e., a control module, the update on the control section virtualized and created. Thus, the entire system can be easily upgraded. Further, hardware resources may be determined depending on the scale of the air conditioning system 1. Therefore, waste of CPU resources can be reduced.

While the indoor unit control sections 41 and 42 and the outdoor unit control section 43 are consolidated into the control device 3, and respectively exist as virtualized control sections in the present embodiment, such an aspect need not necessarily be used. For example, the indoor unit control sections 41 and 42 and the outdoor unit control section 43 may respectively exist independently of the indoor units A1 and A2 and the outdoor unit B. The indoor unit control sections 41 and 42 and the outdoor unit control section 43 may be provided on a cloud. While the control device 3 and each of the indoor units A1 and A2 and the outdoor unit B2 are connected to each other via the common bus 5 in the present embodiment, the present invention is not limited to such an aspect. For example, each of the indoor unit control sections 41 and 42 and the indoor units A1 and A2 respectively corresponding thereto may be in a one-to-one communication. When the control section (e.g., the indoor unit control section 41) and the corresponding equipment (e.g., the indoor unit A1) are thus in a one-to-one communication, a communication delay caused by an increase in communication amount can be reduced. For communication between the control sections within the control device 3, high-speed communication can be applied. Therefore, an effect of a decrease in communication speed by an increase in data amount can be avoided.

A heat source system according to an embodiment of the present invention and a method of controlling the same will be described below.

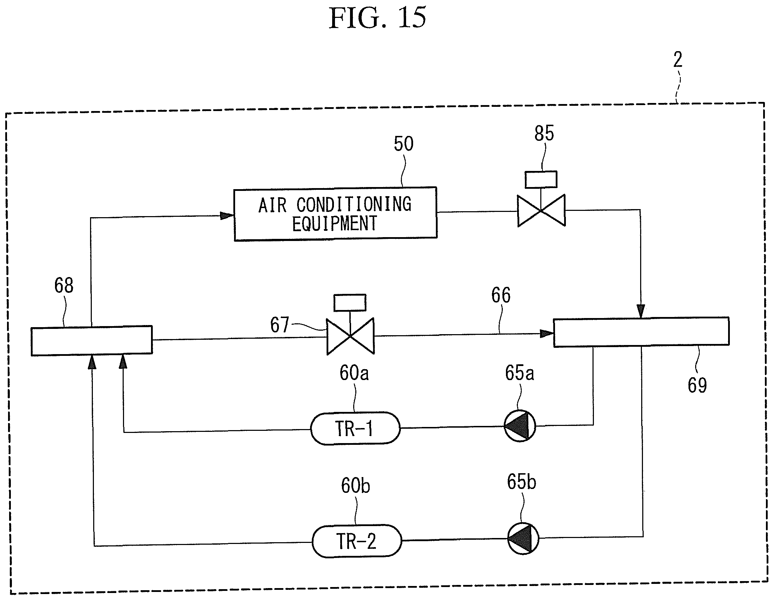

Fig. 15 is a diagram illustrating a cooling medium system in the heat source system 2 according to the present embodiment. As illustrated in Fig. 15, the heat source system 2 according to the present embodiment includes an air conditioning equipment (heat utilization device) 50 and a plurality of heat source units 60a and 60b. The air conditioning equipment is an example of a device using heat supplied from the heat source units 60a and 60b, and is not limited to this example. Examples of the heat source units 60a and 60b include a turbo refrigerator. While a case where the two heat source units 60a and 60b are installed has been illustrated as an example in Fig. 15, the number of heat source units to be installed is not limited. Each of the heat source units 60a and 60b may function as a cooling device for cooling a heating medium, or may function as a heating device that heats a heating medium. Each of the heat source units 60a and 60b may have both functions of heating and cooling. A configuration of the turbo refrigerator is known, and hence description thereof is omitted herein.

On the upstream side of the heat source units 60a and 60b, as viewed from the flow of cooling water, pumps 65a and 65b, which pressure-feed a heating medium (e.g., cooling water), are respectively installed. The pumps 65a and 65b respectively feed heating media from a return header 69 to the heat source units 60a and 60b. Each of the pumps 65a and 65b is operated by an inverter motor (not illustrated). Thus, a variable flow rate is controlled by making a rotation number variable.

The heating medium, which has been cooled or heated in each of the heat source units 60a and 60b, is gathered in a supply header 68. The heating medium, which has been gathered in the supply header 68, is supplied to the air conditioning equipment 50. The heating medium, whose temperature has been raised or lowered in the air conditioning equipment 50, is fed to the return header 69, and branches into heating media herein. The heating media are respectively fed to heat source units 60a and 60b again.

A piping between the air conditioning equipment 50 and the return header 69 is provided with a flow control valve 85. When the opening of the flow control valve 85 is adjusted, the flow rate of the heating medium can be adjusted. A bypass piping 66 is provided between the supply header 68 and the return header 69. When the opening of a bypass valve 67 provided in the bypass piping 66 is adjusted, an amount of the heating medium to be supplied to the air conditioning equipment 50 can be adjusted.

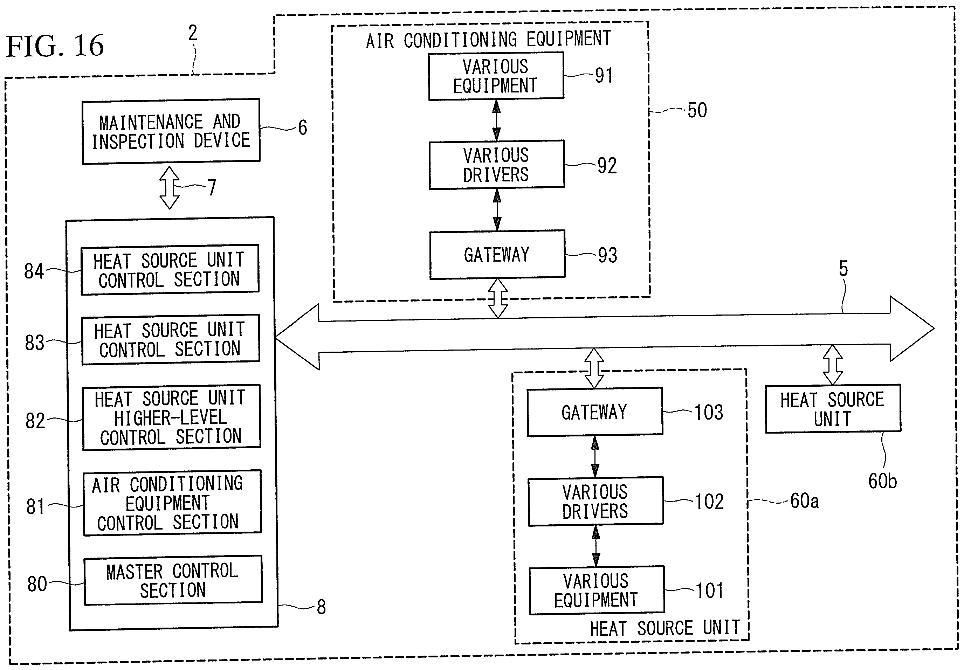

Fig. 16 is an electrical configuration diagram of the heat source system 2 according to the present embodiment. As illustrated in Fig. 16, an air conditioning equipment 50, heat source units 60a and 60b, and a control device 8 are connected to one another via a common bus 5, and are adapted to be able to give and accept information to and from one another. The common bus 5 is one example of a communication medium irrespective of whether communication is wireless or wired. Further, the control device 8 is connected to a maintenance and inspection device 6, which performs maintenance and inspection, via a communication medium 7, and is adapted to be able to periodically transmit operation data and quickly notify, when an abnormality has occurred, the occurrence of the abnormality.

In the control device 8, an air conditioning equipment control section 81, which controls the air conditioning equipment 50 and the flow control valve 85, a heat source unit higher-level control section 82 serving as a higher-level control section of each of the heat source units 60a and 60b, and heat source unit control sections 83 and 84, which respectively control the heat source units 60a and 60b, are provided independently of the air conditioning equipment 50 and the heat source units 60a and 60b. The heat source unit higher-level control section 82 controls the number of heat source units 60a and 60b in response to a request load of the air conditioning equipment 50, controls respective rotation numbers of the pumps 65a and 65b, and controls the opening of the bypass valve 67, for example.

In the control device 8, the air conditioning equipment control section 81, the heat source unit higher-level control section 82, and the heat source unit control sections 83 and 84 are respectively created as virtualized control sections in the control device 8, like the indoor unit control sections 41 and 42 and the outdoor unit control section 43, described above. That is, the air conditioning equipment control section 81, the heat source unit higher-level control section 82, and the heat source unit control sections 83 and 84 are consolidated into the control device 8 having one piece of hardware, for example, and can respectively perform independent operations on the hardware of the control device 8. The control device 8 includes a master control section 80 for causing the air conditioning equipment control section 81, the heat source unit higher-level control section 82, and the heat source unit control sections 83 and 84 to virtually exist in the control device.

In the control device 8, the air conditioning equipment control section 81 and the heat source unit higher-level control section 82, and the heat source unit higher-level control section 82 and the heat source unit control sections 83 and 84 can respectively give and accept information to and from each other, and the air conditioning equipment control section 81, the heat source unit higher-level control section 82, and the heat source unit control sections 83 and 84 may respectively implement independent autonomous distributed controls while sharing information. Processing to be executed by the master control section 40, e.g., a method of creating the virtualized control sections is similar to that in the aforementioned air conditioning system 1.

In the air conditioning equipment 50, various drivers 92 respectively provided to correspond to various types of equipment 91 such as an indoor fan and an electronic expansion valve are connected to the common bus 5 via a gateway 93. In the heat source unit 60a, various drivers 92 respectively provided to correspond to various devices 101 such as a compressor motor (specifically, an inverter that controls power to be supplied to the motor) and an expansion valve are connected to the common bus 5 via a gateway 103. The heat source unit 60b is also configured similarly to the heat source unit 60a, illustration of which is omitted. Pumps 65a and 65b, a bypass valve 67, a flow control valve 85 (not illustrated), and the like are connected to the common bus 5 via drivers or gateways respectively provided therein, and are adapted to be able to communicate with the heat source unit higher-level control section 82 and the air conditioning equipment control section 81.

In this heat source system 2, the air conditioning equipment control section 81 in the control device 8 acquires control information from the various drivers 92 in the air conditioning equipment 50 via the common bus 5, and outputs a control instruction to the various types of equipment (e.g., an indoor fan, an electronic expansion valve, etc.) 91 provided in the air conditioning equipment 50 by executing a predetermined air conditioning equipment control program based on the control information. The control instruction is sent to the various drivers 92 via the common bus 5 and the gateway 93. The various drivers 92 respectively drive corresponding equipment based on the received control instruction. Thus, control of the air conditioning equipment 50 based on the control instruction is implemented.

The air conditioning equipment control section 81 creates an opening instruction for the flow control valve 85, and outputs the created opening instruction to the common bus 5. Thus, the opening instruction is output to the driver via the gateway in the flow control valve 85 through the common bus 5 so that control of opening of the flow control valve 85 is implemented.

Similarly, the heat source unit higher-level control section 82 in the control device 8 receives information such as request load information from the air conditioning equipment control section 81 while acquiring respective information on the heat source units from the heat source unit control sections 83 and 84, and executes a predetermined heat source unit higher-level control program based on the information, to respectively create control instructions such as load factors for the heat source unit control sections 83 and 84 and output the created control instructions to the heat source unit control sections 83 and 84. The heat source unit higher-level control section 82 creates respective rotation number instructions for the pumps 65a and 65b, an opening instruction for the bypass valve 67, and the like, and outputs the control instructions to the common bus 5. The control instructions are respectively output to the drivers via the gateways through the common bus 5 so that control of respective rotation numbers of the pumps 65a and 65b and control of the opening of the bypass valve are implemented.

The heat source unit control section 83 receives measurement data acquired by a sensor (not illustrated) installed in the heat source unit 60a via the common bus 5 and the gateway 103. A predetermined heat source unit control program is executed based on the received measurement data and the control instructions received from the heat source unit higher-level control section 82, to create and output control instructions for the various types of equipment (e.g., a compressor motor, an electronic expansion valve, etc.) 101 provided in the heat source unit 60a. The control instructions are sent to the various drivers 102 in the heat source unit 60a via the common bus 5 and the gateway 103. The various drivers 102 respectively drive the various types of equipment (e.g., a compressor, an inlet guide vane, an expansion valve, etc.) 101 corresponding thereto based on the received control instructions. Thus, control of the heat source unit 60a based on the control instructions is implemented. Similar control is also performed for the heat source unit 60b.

As described above, according to the heat source system 2 according to the present embodiment and a method of controlling the same, when the air conditioning equipment control section 81, the heat source unit higher-level control section 82, and the heat source unit control sections 83 and 84 are consolidated into the control device 8, and perform respectively independent operations as virtualized control sections, the function of each of the control sections is implemented. Thus, the air conditioning equipment 50 and the heat source units 60a and 60b need not be respectively provided with control sections (excluding drivers for controlling the equipment) so that respective configurations of the air conditioning equipment 50 and the heat source units 60a and 60b can be simplified and reduction in cost can be implemented.

The air conditioning equipment 50 and the heat source units 60a and 60b need not be respectively implemented with advanced programs. Therefore, the equipment does not become obsolete, and a partial update (replacement) is enabled. Further, the control device 8 can easily update the virtualized control sections by updating the implemented programs. Thus, the entire system can be easily upgraded. Further, hardware resources may be determined depending on the scale of the heat source system 2. Therefore, waste of CPU resources can be reduced.

While the heat source system 2 is adapted so that the heat source unit higher-level control section 82 is provided, and the heat source unit higher-level control section 82 relays information between the heat source unit control sections 83 and 84 and the air conditioning equipment control section 81 in the present embodiment, the present embodiment is not limited to this. For example, the heat source system 2 may be adapted so that at least one of the heat source unit control sections 83 and 84 is made to have a function to be implemented by the heat source unit higher-level control section 82, the heat source unit control section 83 (84) and the air conditioning equipment control section 81 are made to directly give and accept information to and from each other, to implement various types of controls such as control of the number of heat source units in response to the request load or the like. In this case, the heat source unit higher-level control section 82 can be omitted as a constituent element.

{Reference Signs List}

| | |
|---|---|
| 1, 2 | Air conditioning system |
| 3, 3', 8 | Control device |
| 5 | Common bus |
| 20 | Sensors |
| 40 | Master control section |
| 41, 42 | Indoor unit control section |

| 43, 45~47 | Outdoor unit control section |
| 50 | Air conditioning equipment |
| 53, 63, 93, 103 | Gateway |
| 60a, 60b | Heat source unit |
| 71 | AD board |
| 81 | Air conditioning equipment control section |
| 82 | Heat source unit higher-level control section |
| 83, 84 | Heat source unit control section |
| A1, A2 | Indoor unit |
| B, B1~B3 | Outdoor unit |

**Claims**

1. An air conditioning system comprising:

   an outdoor unit (B) including communication means;
   an indoor unit (AI, A2) including communication means; a control device (3);
   an outdoor unit control section (43) configured to communicate with the outdoor unit via a communication medium while existing independently of the outdoor unit (B); and
   an indoor unit control section (41, 42) configured to communicate with the indoor unit (AI, A2) via a communication medium while existing independently of the indoor unit (AI, A2),
   wherein the outdoor unit control section (43) and the indoor unit control section (41, 42) are configured to bidirectionally communicate with each other,
   the outdoor unit control section (43) being configured to acquire information on equipment provided in the outdoor unit (B) via the communication medium while outputting a control instruction to the equipment provided in the outdoor unit (B), and
   the indoor unit control section (41, 42) being configured to acquire information on equipment provided in the indoor unit (AI, A2) via the communication medium while outputting a control instruction to the equipment provided in the indoor unit (AI, A2),
   the air conditioning system being configured so that the outdoor unit control section (41, 42) and the indoor unit control section (43) are respectively implemented as virtualized control sections onto the control device (3),
   wherein the control device (3) includes a master control section (40),
   the master control section (40) being configured to acquire attribute information on the indoor unit (AI, A2) and the outdoor unit (B) connected to the communication medium at the time of startup, and
   the air conditioning system being configured so that the virtualized indoor unit control section and the virtualized outdoor unit control section are respectively created based on the attribute information.

2. The air conditioning system according to claim 1, wherein
   the master control section (40) is configured to assign each of the indoor unit (AI, A2) and the outdoor unit (B) a virtual CPU and a memory region corresponding thereto based on the attribute information, and
   the air conditioning system is configured so that the virtualized outdoor unit control section and the virtualized indoor unit control section are created by storing respective control programs corresponding to the attribute information acquired from the indoor unit (AI, A2) and the outdoor unit (B) in the respective memory regions.

3. The air conditioning system according to claim 2, further comprising
   control module storage means storing a control module corresponding to each of a plurality of pieces of equipment provided in the indoor unit (AI, A2) and a control module corresponding to each of a plurality of pieces of equipment provided in the outdoor unit (B),
   wherein the master control section (40) is configured to acquire the control module corresponding to the equipment provided in the indoor unit (AI, A2) from the control module storage means to create a custom control program and store the custom control program in a memory region corresponding to the indoor unit (AI, A2) while acquiring the control module corresponding to the equipment provided in the outdoor unit (B) from the control module storage means to create a custom control program and storing the custom control program in a memory region corresponding to the outdoor unit.

4. The air conditioning system according to claim 3, wherein
   the master control section (40) is configured to store memory images respectively stored in memory regions of the indoor unit control section (41, 42) and the outdoor unit (43) control section in a master storage region, and the air condition system being configured so that the virtualized indoor unit control section and the virtualized outdoor unit control section are created by storing the respective memory images stored in the master storage region in the respective memory regions corresponding thereto at the time of second and subsequent startups.

**5.** The air conditioning system according to claim 3 or 4, wherein
the control device (3) is configured to start the master control section (40) when the control device (3) receives information on a program update, and
the master control section (40) is configured to update the control modules stored in the control module storage means based on the information on the program update, and to update the respective custom control programs stored in the memory regions using the updated control modules.

**6.** The air conditioning system according to any one of claims 3 to 5, wherein
the control device (3) is configured to start the master control section (40) when the control device (3) receives change information on the indoor unit (AI, A2) or the outdoor unit (B), and
the master control section (40) is configured to add the indoor unit control section (41, 42) or the outdoor unit control section (43) or to update the custom control program in response to the attribute information on the changed indoor unit (A1, A2) or outdoor unit (B).

**7.** The air conditioning system according to any one of claims 1 to 6, wherein, when the control device (3) comprises a plurality of control devices (3a, 3b, 3c),
the master control section (40a, 40b, 40c) in any one of the control devices (3a, 3b 3c) is configured to operate as a higher-level master control section while the master control section (40a, 40b, 40c) in the other control device (3a, 3b, 3c) operates as a lower-level master control section,
the higher-level master control section is configured to allocate, according to the capability of the control device including itself and the capability of the other control device, the indoor unit control section (41, 42) and the outdoor unit control section (43) to each of the control devices (3a, 3b, 3c), and
each of the control devices (3a, 3b, 3c) is configured to create the indoor unit control section (41, 42) and/or the outdoor unit control section (43) allocated to itself.

**8.** The air conditioning system according to claim 7, configured so that the master control section (40a, 40b, 40c) in the control device (3a, 3b, 3c) having the highest capability is selected as the higher-level master control section.

**9.** The air conditioning system according to any one of claims 1 to 8, wherein the control device (3) is installed on a cloud.

**10.** The air conditioning system according to claims 1 to 9, wherein the virtualized indoor unit control section or the virtualized outdoor unit control section provided in the control device (3) is configured to receive information from a sensor (20) attached to the indoor unit (AI, A2) or the outdoor unit (B) and the other outdoor unit control section (43) or the other indoor unit control section (41, 42), and a predetermined application is configured to give a control instruction to the indoor unit (AI, A2) or the outdoor unit (B) corresponding thereto according to a predetermined control rule using the information as an input.

**11.** The air conditioning system according to any one of claims 1 to 10, wherein
the outdoor unit (B) comprises a plurality of outdoor units (BI, B2, B3), and
the outdoor unit control section (43) comprises a plurality of outdoor unit control sections (45, 46, 47) respectively corresponding to the plurality of outdoor units (BI, B2, B3),
the plurality of outdoor unit control sections (45, 46, 47) are configured to bidirectionally communicate with one another,
one of the outdoor unit control sections (45, 46, 47)
is confirgured to acquire information on respective performance coefficient characteristics and capability available ranges of the plurality of outdoor units (BI, B2, B3), and
the air conditioning device being configured so that the outdoor units (BI, B2, B3) are assigned higher priorities in descending order of their maximum coefficients of performance (COPs) based on the acquired information, and the outdoor units (BI, B2, B3) are sequentially started in descending order of the priorities while each of the outdoor units (BI, B2, B3) is operated in a capability range in which the coefficient of performance of the outdoor unit (BI, B2, B3) is higher than the coefficient of performance of the other outdoor unit (BI, B2, B3) that is lower in priority than the outdoor unit.

**12.** A control device (3) comprising:

an outdoor unit control section (43) configured to communicate with an outdoor unit (B) of an air conditioning device via a communication medium while existing independently of the outdoor unit (B); and

an indoor unit control section (41, 42) configured to communicate with an indoor unit (A1, A2) of an air conditioning device via a communication medium while existing independently of the indoor unit,

wherein the outdoor unit control section (43) and the indoor unit control section (41, 42) are configured to bidirectionally communicate with each other,

the outdoor unit control section (43) is configured to acquire information on equipment provided in the outdoor unit (B) via the communication medium while outputting a control instruction to the equipment provided in the outdoor unit (B), and

the indoor unit control section (41, 42) is configured to acquire information on equipment provided in the indoor unit (Al, A2) via the communication medium while outputting a control instruction to the equipment provided in the indoor unit (Al, A2),

the control device being configured so that the indoor unit control section (41, 42) and the outdoor unit control section (43) are respectively implemented as virtualized control sections,

wherein the control device (3) includes a master control section (40),

the master control section (40) being configured to acquire attribute information on the indoor unit (Al, A2) and the outdoor unit (B) connected to the communication medium at the time of startup, and

the control device being configured so that the virtualized indoor unit control section and the virtualized outdoor unit control section are respectively created based on the attribute information.

**13.** A method of controlling an air conditioning system (1, 2) comprising an indoor unit (A1, A2) and an outdoor unit (B), the control method comprising:

causing an indoor unit control section (41, 42) that controls the indoor unit (A1, A2) and an outdoor unit control section (43) that controls the outdoor unit (B) to respectively exist independently of the indoor unit and the outdoor unit;

enabling bidirectional communication between the indoor unit control section (41, 42) and the outdoor unit control section (43) while enabling bidirectional communication between the indoor unit control section (41, 42) and the indoor unit (Al, A2) and the outdoor unit control section (43) and the outdoor unit (B),

acquiring attribute information on the indoor unit (A1, A2) and the outdoor unit (B) at the time of startup, and implementing respectively the outdoor unit control section (43) and the indoor unit control section (41, 42) as virtualized control sections onto a control device (3), based on the attribute information.

**Patentansprüche**

**1.** Klimatisierungssystem, das Folgendes umfasst:

eine Außeneinheit (B), die ein Kommunikationsmittel beinhaltet;

eine Inneneinheit (A1, A2), die ein Kommunikationsmittel beinhaltet;

eine Steuervorrichtung (3);

einen Außeneinheitsteuerbereich (43), der dazu ausgelegt ist, via ein Kommunikationsmedium mit der Außeneinheit zu kommunizieren, während er unabhängig von der Außeneinheit (B) existiert; und

einen Inneneinheitsteuerbereich (41, 42), der dazu ausgelegt ist, via ein Kommunikationsmedium mit der Inneneinheit (A1, A2) zu kommunizieren, während er unabhängig von der Inneneinheit (A1, A2) existiert,

wobei der Außeneinheitsteuerbereich (43) und der Inneneinheitsteuerbereich (41, 42) dazu ausgelegt sind, bidirektional miteinander zu kommunizieren,

wobei der Außeneinheitsteuerbereich (43) dazu ausgelegt ist, via das Kommunikationsmedium Informationen über eine Ausrüstung zu erfassen, die in der Außeneinheit (B) bereitgestellt ist, während er eine Steueranweisung an die in der Außeneinheit (B) bereitgestellte Ausrüstung ausgibt, und

wobei der Inneneinheitsteuerbereich (41, 42) dazu ausgelegt ist, via das Kommunikationsmedium Informationen über eine Ausrüstung zu erfassen, die in der Inneneinheit (A1, A2) bereitgestellt ist, während er eine Steueranweisung an die in der Inneneinheit (A1, A2) bereitgestellte Ausrüstung ausgibt,

wobei das Klimatisierungssystem derart ausgelegt ist, dass der Außeneinheitsteuerbereich (41, 42) und der Inneneinheitsteuerbereich (43) jeweils als virtualisierte Steuerbereiche auf der Steuervorrichtung (3) implementiert sind,

wobei die Steuervorrichtung (3) einen Mastersteuerbereich (40) beinhaltet,
wobei der Mastersteuerbereich (40) dazu ausgelegt ist, Attributinformationen über die Inneneinheit (A1, A2) und die Außeneinheit (B), die zur Zeit des Starts mit dem Kommunikationsmedium verbunden sind, zu erfassen, und
wobei das Klimatisierungssystem derart ausgelegt ist, dass der virtualisierte Inneneinheitsteuerbereich und der virtualisierte Außeneinheitsteuerbereich jeweils auf Basis der Attributinformationen erstellt werden.

2. Klimatisierungssystem nach Anspruch 1, wobei
der Mastersteuerbereich (40) dazu ausgelegt ist, jeder der Inneneinheit (A1, A2) und der Außeneinheit (B) auf Basis der Attributinformationen eine virtuelle CPU und eine Speicherregion, die dieser entspricht, zuzuweisen, und
das Klimatisierungssystem derart ausgelegt ist, dass der virtualisierte Außeneinheitsteuerbereich und der virtualisierte Inneneinheitsteuerbereich durch Speichern von jeweiligen Steuerprogrammen, die den Attributinformationen entsprechen, die von der Inneneinheit (A1, A2) und der Außeneinheit (B) erfasst wurden, in den jeweiligen Speicherregionen erstellt werden.

3. Klimatisierungssystem nach Anspruch 2, das ferner Folgendes umfasst
ein Steuermodulspeichermittel, auf dem ein Steuermodul, das jedem einer Vielzahl von Ausrüstungsteilen entspricht, die in der Inneneinheit (A1, A2) bereitgestellt sind, und ein Steuermodul, das jedem einer Vielzahl von Ausrüstungsteilen entspricht, die in der Außeneinheit (B) bereitgestellt sind, gespeichert sind,
wobei der Mastersteuerbereich (40) dazu ausgelegt ist, das Steuermodul, das der Ausrüstung entspricht, die in der Inneneinheit (A1, A2) bereitgestellt ist, vom Steuermodulspeichermittel zu erfassen, um ein angepasstes Steuerprogramm zu erstellen, und das angepasste Steuerprogramm in einer Speicherregion zu speichern, die der Inneneinheit (A1, A2) entspricht, während er das Steuermodul, das der Ausrüstung entspricht, die in der Außeneinheit (B) bereitgestellt ist, vom Steuermodulspeichermittel erfasst, um ein angepasstes Steuerprogramm zu erstellen, und das angepasste Steuerprogramm in einer Speicherregion speichert, die der Außeneinheit entspricht.

4. Klimatisierungssystem nach Anspruch 3, wobei
der Mastersteuerbereich (40) dazu ausgelegt ist, Speicherbilder, die jeweils in Speicherregionen des Inneneinheitsteuerbereichs (41, 42) und der Außeneinheitsteuerbereich (43) gespeichert sind, in einem Masterspeicherbereich zu speichern, und
das Klimatisierungssystem derart ausgelegt ist, dass der virtualisierte Inneneinheitsteuerbereich und der virtualisierte Außeneinheitsteuerbereich durch Speichern der jeweiligen Speicherbilder, die im Masterspeicherbereich gespeichert sind, in den jeweiligen Speicherregionen, die demselben entsprechen, zur Zeit des zweiten und von nachfolgenden Starts erstellt werden.

5. Klimatisierungssystem nach Anspruch 3 oder 4, wobei
die Steuervorrichtung (3) dazu ausgelegt ist, den Mastersteuerbereich (40) zu starten, wenn die Steuervorrichtung (3) Informationen über eine Programmaktualisierung empfängt, und
der Mastersteuerbereich (40) dazu ausgelegt ist, die Steuermodule, die im Steuermodulspeichermittel gespeichert sind, auf Basis der Informationen über die Programmaktualisierung zu aktualisieren und die jeweiligen angepassten Steuerprogramme, die in den Speicherregionen gespeichert sind, unter Verwendung der aktualisierten Steuermodule zu aktualisieren.

6. Klimatisierungssystem nach einem der Ansprüche 3 bis 5, wobei
die Steuervorrichtung (3) dazu ausgelegt ist, den Mastersteuerbereich (40) zu starten, wenn die Steuervorrichtung (3) Änderungsinformationen über die Inneneinheit (A1, A2) oder die Außeneinheit (B) empfängt, und
der Mastersteuerbereich (40) dazu ausgelegt ist, in Reaktion auf die Attributinformationen über die geänderte Inneneinheit (A1, A2) oder die Außeneinheit (B) den Inneneinheitsteuerbereich (41, 42) oder den Außeneinheitsteuerbereich (43) hinzuzufügen oder das angepasste Steuerprogramm zu aktualisieren.

7. Klimatisierungssystem nach einem der Ansprüche 1 bis 6, wobei, wenn die Steuervorrichtung (3) eine Vielzahl von Steuervorrichtungen (3a, 3b, 3c) umfasst,
der Mastersteuerbereich (40a, 40b, 40c) in einer beliebigen der Steuervorrichtungen (3a, 3b 3c) dazu ausgelegt ist, als ein Mastersteuerbereich hoher Ebene betrieben zu werden, während der Mastersteuerbereich (40a, 40b, 40c) in der anderen Steuervorrichtung (3a, 3b, 3c) als ein Mastersteuerbereich niedriger Ebene betrieben wird,
der Mastersteuerbereich hoher Ebene dazu ausgelegt ist, gemäß der Fähigkeit der Steuervorrichtung, sich selbst beinhaltend, und der Fähigkeit der anderen Steuervorrichtung den Inneneinheitsteuerbereich (41, 42) und den Außeneinheitsteuerbereich (43) jeder der Steuervorrichtungen (3a, 3b, 3c) zuzuordnen, und

jede der Steuervorrichtungen (3a, 3b, 3c) dazu ausgelegt ist, den Inneneinheitsteuerbereich (41, 42) und/oder den Außeneinheitsteuerbereich (43) sich selbst zugeordnet zu erstellen.

8. Klimatisierungssystem nach Anspruch 7, das derart ausgelegt ist, dass der Mastersteuerbereich (40a, 40b, 40c) in der Steuervorrichtung (3a, 3b, 3c) mit der größten Fähigkeit als der Mastersteuerbereich hoher Ebene ausgewählt wird.

9. Klimatisierungssystem nach einem der Ansprüche 1 bis 8, wobei die Steuervorrichtung (3) in einer Cloud installiert ist.

10. Klimatisierungssystem nach einem der Ansprüche 1 bis 9, wobei der virtualisierte Inneneinheitsteuerbereich oder der virtualisierte Außeneinheitsteuerbereich, die in der Steuervorrichtung (3) bereitgestellt sind, dazu ausgelegt ist, Informationen von einem Sensor (20), der an der Inneneinheit (A1, A2) oder der Außeneinheit (B) angebracht ist, und vom anderen Außeneinheitsteuerbereich (43) oder vom anderen Inneneinheitsteuerbereich (41, 42) zu empfangen, und eine vorbestimmte Anwendung dazu ausgelegt ist, der Inneneinheit (A1, A2) oder der Außeneinheit (B), die ihr entspricht, gemäß einer vorbestimmten Steuerregel unter Verwendung der Informationen als eine Eingabe eine Steueranweisung zu geben.

11. Klimatisierungssystem nach einem der Ansprüche 1 bis 10, wobei
die Außeneinheit (B) eine Vielzahl von Außeneinheiten (B1, B2, B3) umfasst, und
der Außeneinheitsteuerbereich (43) eine Vielzahl von Außeneinheitsteuerbereichen (45, 46, 47) umfasst, die jeweils der Vielzahl von Außeneinheiten (B1, B2, B3) entsprechen,
wobei die Vielzahl von Außeneinheitsteuerbereichen (45, 46, 47) dazu ausgelegt sind, bidirektional miteinander zu kommunizieren,
einer der Außeneinheitsteuerbereiche (45, 46, 47) dazu ausgelegt ist, Informationen über jeweilige Leistungskoeffizientencharakteristika und verfügbare Fähigkeitsumfänge der Vielzahl von Außeneinheiten (B1, B2, B3) zu erfassen, und
wobei die Klimatisierungsvorrichtung derart ausgelegt ist, dass den Außeneinheiten (B1, B2, B3) auf Basis der erfassten Informationen höhere Prioritäten in absteigender Reihenfolge ihrer maximalen Leistungskoeffizienten (COPs) zugewiesen werden, und die Außeneinheiten (B1, B2, B3) sequenziell in absteigender Reihenfolge der Prioritäten gestartet werden, während jede der Außeneinheiten (B1, B2, B3) in einem Fähigkeitsumfang betrieben wird, in dem der Leistungskoeffizient der Außeneinheit (B1, B2, B3) höher als der Leistungskoeffizient der anderen Außeneinheit ist (B1, B2, B3), die eine geringere Priorität als die Außeneinheit aufweist.

12. eine Steuervorrichtung (3), die Folgendes umfasst:

einen Außeneinheitsteuerbereich (43), der dazu ausgelegt ist, via ein Kommunikationsmedium mit einer Außeneinheit (B) einer Klimatisierungsvorrichtung zu kommunizieren, während er unabhängig von der Außeneinheit (B) existiert; und
einen Inneneinheitsteuerbereich (41, 42), der dazu ausgelegt ist, via ein Kommunikationsmedium mit einer Inneneinheit (A1, A2) einer Klimatisierungsvorrichtung zu kommunizieren, während er unabhängig von der Inneneinheit existiert,
wobei der Außeneinheitsteuerbereich (43) und der Inneneinheitsteuerbereich (41, 42) dazu ausgelegt sind, bidirektional miteinander zu kommunizieren,
wobei der Außeneinheitsteuerbereich (43) dazu ausgelegt ist, via das Kommunikationsmedium Informationen über eine Ausrüstung zu erfassen, die in der Außeneinheit (B) bereitgestellt ist, während er eine Steueranweisung an die in der Außeneinheit (B) bereitgestellte Ausrüstung ausgibt, und
wobei der Inneneinheitsteuerbereich (41, 42) dazu ausgelegt ist, via das Kommunikationsmedium Informationen über eine Ausrüstung zu erfassen, die in der Inneneinheit (A1, A2) bereitgestellt ist, während er eine Steueranweisung an die in der Inneneinheit (A1, A2) bereitgestellte Ausrüstung ausgibt,
wobei die Steuervorrichtung derart ausgelegt ist, dass der Inneneinheitsteuerbereich (41, 42) und der Außeneinheitsteuerbereich (43) jeweils als virtualisierte Steuerbereiche implementiert sind,
wobei die Steuervorrichtung (3) einen Mastersteuerbereich (40) beinhaltet,
wobei der Mastersteuerbereich (40) dazu ausgelegt ist, Attributinformationen über die Inneneinheit (A1, A2) und die Außeneinheit (B), die zur Zeit des Starts mit dem Kommunikationsmedium verbunden sind, zu erfassen, und
wobei die Steuervorrichtung derart ausgelegt ist, dass der virtualisierte Inneneinheitsteuerbereich und der virtualisierte Außeneinheitsteuerbereich jeweils auf Basis der Attributinformationen erstellt werden.

**13.** Verfahren zum Steuern eines Klimatisierungssystems (1, 2), das eine Inneneinheit (A1, A2) und eine Außeneinheit (B) umfasst, wobei das Steuerverfahren Folgendes umfasst:

Bewirken, dass ein Inneneinheitsteuerbereich (41, 42), der die Inneneinheit (A1, A2) steuert, und ein Außeneinheitsteuerbereich (43), der die Außeneinheit (B) steuert, jeweils unabhängig von der Inneneinheit und der Außeneinheit existieren;

Ermöglichen einer bidirektionalen Kommunikation zwischen dem Inneneinheitsteuerbereich (41, 42) und dem Außeneinheitsteuerbereich (43), während eine bidirektionale Kommunikation zwischen dem Inneneinheitsteuerbereich (41, 42) und der Inneneinheit (A1, A2) sowie dem Außeneinheitsteuerbereich (43) und der Außeneinheit (B) ermöglicht wird,

Erfassen von Attributinformationen über die Inneneinheit (A1, A2) und die Außeneinheit (B) zur Zeit des Starts, und

Implementieren des Außeneinheitsteuerbereichs (43) bzw. des Inneneinheitsteuerbereichs (41, 42) als virtualisierte Steuerbereiche auf einer Steuervorrichtung (3) auf Basis der Attributinformationen.

## Revendications

**1.** Système de climatisation comprenant :

une unité extérieure (B) comportant des moyens de communication ;
une unité intérieure (A1, A2) comportant des moyens de communication ;
un dispositif de commande (3) ;
une section de commande d'unité extérieure (43) configurée pour communiquer avec l'unité extérieure via un moyen de communication, tout en existant indépendamment de l'unité extérieure (B) ; et
une section de commande d'unité intérieure (41, 42) configurée pour communiquer avec l'unité intérieure (A1, A2) via un moyen de communication, tout en existant indépendamment de l'unité intérieure (A1, A2),
dans lequel la section de commande d'unité extérieure (43) et la section de commande d'unité intérieure (41, 42) sont configurées pour communiquer entre elles de manière bidirectionnelle,
la section de commande d'unité extérieure (43) étant configurée pour acquérir des informations sur un équipement prévu dans l'unité extérieure (B) via le moyen de communication, tout en délivrant une instruction de commande à l'équipement prévu dans l'unité extérieure (B), et
la section de commande d'unité intérieure (41, 42) étant configurée pour acquérir des informations sur un équipement prévu dans l'unité intérieure (A1, A2) via le moyen de communication, tout en délivrant une instruction de commande à l'équipement prévu dans l'unité intérieure (A1, A2),
le système de climatisation étant configuré de sorte que la section de commande d'unité extérieure (41, 42) et la section de commande d'unité intérieure (43) soient mises en œuvre respectivement en tant que sections de commande virtualisées sur le dispositif de commande (3),
dans lequel le dispositif de commande (3) comporte une section de commande principale (40),
la section de commande principale (40) étant configurée pour acquérir des informations d'attribut sur l'unité intérieure (A1, A2) et l'unité extérieure (B) connectées au moyen de communication au moment du démarrage, et
le système de climatisation étant configuré de sorte que la section de commande d'unité intérieure virtualisée et la section de commande d'unité extérieure virtualisée soient créées respectivement sur la base des informations d'attribut.

**2.** Système de climatisation selon la revendication 1, dans lequel
la section de commande principale (40) est configurée pour attribuer à chacune parmi l'unité intérieure (A1, A2) et l'unité extérieure (B) une CPU virtuelle et une région de mémoire y correspondant, sur la base des informations d'attribut, et
le système de climatisation est configuré de sorte que la section de commande d'unité extérieure virtualisée et la section de commande d'unité intérieure virtualisée soient créées en stockant des programmes de commande respectifs correspondant aux informations d'attribut acquises à partir de l'unité intérieure (A1, A2) et de l'unité extérieure (B) dans les régions de mémoire respectives.

**3.** Système de climatisation selon la revendication 2, comprenant en outre
des moyens de stockage de module de commande stockant un module de commande correspondant à chacune d'une pluralité de pièces d'un équipement prévu dans l'unité intérieure (A1, A2), et un module de commande correspondant à chacune d'une pluralité de pièces d'un équipement prévu dans l'unité extérieure (B),

dans lequel la section de commande principale (40) est configurée pour acquérir le module de commande correspondant à l'équipement prévu dans l'unité intérieure (A1, A2) à partir des moyens de stockage de module de commande pour créer un programme de commande personnalisé, et pour stocker le programme de commande personnalisé dans une région de mémoire correspondant à l'unité intérieure (A1, A2), tout en acquérant le module de commande correspondant à l'équipement prévu dans l'unité extérieure (B) à partir des moyens de stockage de module de commande pour créer un programme de commande personnalisé, et en stockant le programme de commande personnalisé dans une région de mémoire correspondant à l'unité extérieure.

**4.** Système de climatisation selon la revendication 3, dans lequel
la section de commande principale (40) est configurée pour stocker des images de mémoire stockées respectivement dans des régions de mémoire de la section de commande d'unité intérieure (41, 42) et de la section de commande de l'unité extérieure (43), dans une région de stockage principale, et
le système de climatisation étant configuré de sorte que la section de commande d'unité intérieure virtualisée et la section de commande d'unité extérieure virtualisée soient créées en stockant les images de mémoire respectives stockées dans la région de stockage principale dans les régions de mémoire respectives y correspondant, au moment d'un deuxième démarrage et de démarrages ultérieurs.

**5.** Système de climatisation selon la revendication 3 ou 4, dans lequel
le dispositif de commande (3) est configuré pour démarrer la section de commande principale (40) lorsque le dispositif de commande (3) reçoit des informations sur une mise à jour de programme, et
la section de commande principale (40) est configurée pour mettre à jour les modules de commande stockés dans les moyens de stockage de module de commande sur la base des informations sur la mise à jour de programme, et pour mettre à jour les programmes de commande personnalisés respectifs stockés dans les régions de mémoire, en utilisant les modules de commande mis à jour.

**6.** Système de climatisation selon l'une quelconque des revendications 3 à 5, dans lequel
le dispositif de commande (3) est configuré pour démarrer la section de commande principale (40) lorsque le dispositif de commande (3) reçoit des informations de modification sur l'unité intérieure (A1, A2) ou l'unité extérieure (B), et
la section de commande principale (40) est configurée pour ajouter la section de commande d'unité intérieure (41, 42) ou la section de commande d'unité extérieure (43), ou pour mettre à jour le programme de commande personnalisé en réponse aux informations d'attribut sur l'unité intérieure (A1, A2) ou l'unité extérieure (B) modifiée.

**7.** Système de climatisation selon l'une quelconque des revendications 1 à 6, dans lequel, lorsque le dispositif de commande (3) comprend une pluralité de dispositifs de commande (3a, 3b, 3c),
la section de commande principale (40a, 40b, 40c) dans l'un quelconque des dispositifs de commande (3a, 3b, 3c) est configurée pour fonctionner en tant que section de commande principale de plus haut niveau, tandis que la section de commande principale (40a, 40b, 40c) dans l'autre dispositif de commande (3a, 3b, 3c) fonctionne comme une section de commande principale de plus bas niveau,
la section de commande principale de plus haut niveau est configurée pour attribuer, selon la capacité du dispositif de commande, y compris lui-même et la capacité de l'autre dispositif de commande, la section de commande d'unité intérieure (41, 42) et la section de commande d'unité extérieure (43) à chacun des dispositifs de commande (3a, 3b, 3c), et
chacun des dispositifs de commande (3a, 3b, 3c) est configuré pour créer la section de commande d'unité intérieure (41, 42) et/ou la section de commande d'unité extérieure (43) qui lui a été attribuée.

**8.** Système de climatisation selon la revendication 7, configuré de sorte que la section de commande principale (40a, 40b, 40c) dans le dispositif de commande (3a, 3b, 3c) ayant la capacité la plus élevée soit sélectionnée en tant que section de commande principale de plus haut niveau.

**9.** Système de climatisation selon l'une quelconque des revendications 1 à 8, dans lequel le dispositif de commande (3) est installé sur un nuage informatique.

**10.** Système de climatisation selon la revendications 1 à 9, dans lequel la section de commande d'unité intérieure virtualisée ou la section de commande d'unité extérieure virtualisée prévue dans le dispositif de commande (3) est configurée pour recevoir des informations à partir d'un capteur (20) fixé à l'unité intérieure (A1, A2) ou à l'unité extérieure (B), et de l'autre section de commande d'unité extérieure (43) ou de l'autre section de commande d'unité intérieure (41, 42), et une application prédéterminée est configurée pour donner une instruction de commande à l'unité intérieure (A1, A2) ou à l'unité extérieure (B) y correspondant selon une règle de commande prédéterminée en utilisant les informations comme entrée.

11. Système de climatisation selon l'une quelconque des revendications 1 à 10, dans lequel

l'unité extérieure (B) comprend une pluralité d'unités extérieures (B1, B2, B3), et

la section de commande d'unité extérieure (43) comprend une pluralité de sections de commande d'unité extérieure (45, 46, 47) correspondant respectivement à la pluralité d'unités extérieures (B1, B2, B3),

la pluralité de sections de commande d'unité extérieure (45, 46, 47) sont configurées pour communiquer entre elles de manière bidirectionnelle,

une des sections de commande d'unité extérieure (45, 46, 47) est configurée pour acquérir des informations sur des caractéristiques de coefficient de performance et des plages disponibles de capacité respectives de la pluralité d'unités extérieures (B1, B2, B3), et

le dispositif de climatisation est configuré de sorte que les unités extérieures (B1, B2, B3) se voient attribuer des priorités plus élevées dans un ordre décroissant de leurs coefficients de performance (COP) maximaux sur la base des informations acquises, et les unités extérieures (B1, B2, B3) sont démarrées séquentiellement dans un ordre décroissant des priorités, tandis que chacune des unités extérieures (B1, B2, B3) fonctionne dans une plage de capacité dans laquelle le coefficient de performance de l'unité extérieure (B1, B2, B3) est plus élevé que le coefficient de performance de l'autre unité extérieure (B1, B2, B3), qui se trouve plus bas en priorité que l'unité extérieure.

12. Dispositif de commande (3) comprenant :

une section de commande d'unité extérieure (43) configurée pour communiquer avec une unité extérieure (B) d'un dispositif de climatisation via un moyen de communication, tout en existant indépendamment de l'unité extérieure (B) ; et

une section de commande d'unité intérieure (41, 42) configurée pour communiquer avec une unité intérieure (A1, A2) d'un dispositif de climatisation via un moyen de communication, tout en existant indépendamment de l'unité intérieure,

dans lequel la section de commande d'unité extérieure (43) et la section de commande d'unité intérieure (41, 42) sont configurées pour communiquer entre elles de manière bidirectionnelle,

la section de commande d'unité extérieure (43) est configurée pour acquérir des informations sur un équipement prévu dans l'unité extérieure (B) via le moyen de communication tout en délivrant une instruction de commande à l'équipement prévu dans l'unité extérieure (B), et

la section de commande d'unité intérieure (41, 42) est configurée pour acquérir des informations sur un équipement prévu dans l'unité intérieure (A1, A2) via le moyen de communication tout en délivrant une instruction de commande à l'équipement prévu dans l'unité intérieure (A1, A2),

le dispositif de commande étant configuré de sorte que la section de commande d'unité intérieure (41, 42) et la section de commande d'unité extérieure (43) soient mises en œuvre respectivement en tant que sections de commande virtualisées,

dans lequel le dispositif de commande (3) comporte une section de commande principale (40),

la section de commande principale (40) étant configurée pour acquérir des informations d'attribut sur l'unité intérieure (A1, A2) et l'unité extérieure (B) connectées au moyen de communication au moment du démarrage, et

le dispositif de commande étant configuré de sorte que la section de commande d'unité intérieure virtualisée et la section de commande d'unité extérieure virtualisée soient créées respectivement sur la base des informations d'attribut.

13. Procédé de commande d'un système de climatisation (1, 2) comprenant une unité intérieure (A1, A2) et une unité extérieure (B), le procédé de commande comprenant :

amener une section de commande d'unité intérieure (41, 42) qui commande l'unité intérieure (A1, A2) et une section de commande d'unité extérieure (43) qui commande l'unité extérieure (B) à exister indépendamment de l'unité intérieure et de l'unité extérieure, respectivement ;

permettre une communication bidirectionnelle entre la section de commande d'unité intérieure (41, 42) et la section de commande d'unité extérieure (43) tout en permettant une communication bidirectionnelle entre la section de commande d'unité intérieure (41, 42) et l'unité intérieure (A1, A2), et la section de commande d'unité extérieure (43) et l'unité extérieure (B),

acquérir des informations d'attribut sur l'unité intérieure (A1, A2) et l'unité extérieure (B) au moment du démarrage, et

mettre en œuvre respectivement la section de commande d'unité extérieure (43) et la section de commande d'unité intérieure (41, 42) en tant que sections de commande virtualisées sur un dispositif de commande (3), sur la base des informations d'attribut.

FIG. 1

# FIG. 2

EP 3 098 533 B1

# FIG. 3

| | | | APPLICATION LAYER |
|---|---|---|---|
| | EQUIPMENT OPERATION CONTROL APPLICATION | SETTING APPLICATION | |
| COMMUNICATION FRAMEWORK | EQUIPMENT OPERATION CONTROL FRAMEWORK | SETTING PARAMETER | FRAMEWORK LAYER |
| OS | | | OS LAYER |
| COMMUNICATION DRIVER | EQUIPMENT DRIVER | SENSOR DRIVER | DRIVER LAYER |
| COMMON BUS | FAN MOTOR / LOUVER MOTOR | SENSORS | HW LAYER |

EP 3 098 533 B1

# FIG. 4

START

↓

TRANSMIT CONNECTION EQUIPMENT REQUEST FROM MASTER CONTROL SECTION IN CONTROL DEVICE — SA1

↓

RECEIVE RESPONSES FROM INDOOR UNITS AND OUTDOOR UNIT — SA2

↓

CAUSE MASTER CONTROL SECTION TO ARRANGE VIRTUAL CPUs AND MEMORY REGIONS DEPENDING ON NUMBER OF CONNECTION DEVICES — SA3

↓

CAUSE MASTER CONTROL SECTION TO CREATE CUSTOM CONTROL PROGRAMS CORRESPONDING TO FUNCTIONS LOADED ONTO OUTDOOR UNIT AND INDOOR UNITS — SA4

↓

CAUSE MASTER CONTROL SECTION TO STORE CUSTOM CONTROL PROGRAM, TOGETHER WITH OS, IN CORRESPONDING MEMORY REGION — SA5

↓

CAUSE MASTER CONTROL SECTION TO STORE CONNECTION INFORMATION AND MEMORY IMAGE FOR EACH VIRTUAL CPU IN MASTER STORAGE REGION — SA6

↓

CAUSE MASTER CONTROL SECTION TO ISSUE START INSTRUCTION TO VIRTUAL CPU — SA7

↓

START VIRTUALIZED INDOOR UNIT CONTROL SECTIONS AND OUTDOOR UNIT CONTROL SECTION TO ENTER READY STATE — SA8

↓

END

# FIG. 5

```
        ┌──────────────┐
        │    START     │
        └──────┬───────┘
               │
               ▼
┌──────────────────────────────────┐
│   CAUSE MASTER CONTROL SECTION TO │ ─── SB1
│     SEARCH FOR MEMORY IMAGE       │
└──────────────┬───────────────────┘
               │
               ▼
┌──────────────────────────────────┐
│ CAUSE MASTER CONTROL SECTION TO   │ ─── SB2
│ STORE MEMORY IMAGE IN EACH        │
│ MEMORY REGION                     │
└──────────────┬───────────────────┘
               │
               ▼
┌──────────────────────────────────┐
│ CAUSE MASTER CONTROL SECTION TO   │ ─── SB3
│ START VIRTUALIZED INDOOR UNIT     │
│ CONTROL SECTIONS AND OUTDOOR      │
│ UNIT CONTROL SECTION              │
└──────────────┬───────────────────┘
               │
               ▼
        ┌──────────────┐
        │     END      │
        └──────────────┘
```

# FIG. 6

```
          ┌─────────────┐
          │    START    │
          └─────────────┘
                 │
                 ▼
┌──────────────────────────────────────┐
│   CAUSE CONTROL DEVICE TO RECEIVE     │─── SC1
│      EQUIPMENT CHANGE SIGNAL          │
└──────────────────────────────────────┘
                 │
                 ▼
┌──────────────────────────────────────┐
│      START MASTER CONTROL SECTION     │
│   (WITH VIRTUALIZED CONTROL DEVICE    │─── SC2
│  REMAINS STARTED DURING OPERATION)    │
└──────────────────────────────────────┘
                 │
                 ▼
┌──────────────────────────────────────┐
│ CAUSE MASTER CONTROL SECTION TO TRANSMIT │─── SC3
│  CONNECTION EQUIPMENT REQUEST SIGNAL  │
└──────────────────────────────────────┘
                 │
                 ▼
┌──────────────────────────────────────┐
│     RECEIVE RESPONSES FROM INDOOR     │─── SC4
│        UNITS AND OUTDOOR UNIT         │
└──────────────────────────────────────┘
                 │
                 ▼
┌──────────────────────────────────────┐
│ CAUSE MASTER CONTROL SECTION TO UPDATE │
│  CONNECTION INFORMATION AND EXTRACT   │─── SC5
│          DIFFERENCE PORTION           │
└──────────────────────────────────────┘
                 │
                 ▼
┌──────────────────────────────────────┐
│    ASSIGN VIRTUAL CPU AND THE LIKE    │─── SC6
│        FOR DIFFERENCE PORTION         │
└──────────────────────────────────────┘
                 │
                 ▼
          ┌─────────────┐
          │     END     │
          └─────────────┘
```

# FIG. 7

```
          ┌─────────────┐
          │    START    │
          └─────────────┘
                 │
                 ▼
┌──────────────────────────────────────┐
│     START MASTER CONTROL SECTION     │──── SD1
└──────────────────────────────────────┘
                 │
                 ▼
┌──────────────────────────────────────┐
│         LOAD UPDATED PROGRAM         │──── SD2
└──────────────────────────────────────┘
                 │
                 ▼
┌──────────────────────────────────────┐
│        UPDATE MASTER PROGRAM         │──── SD3
└──────────────────────────────────────┘
                 │
                 ▼
┌──────────────────────────────────────┐
│     CREATE CUSTOM CONTROL PROGRAM    │
│    CORRESPONDING TO EACH EQUIPMENT   │──── SD4
│       FROM UPDATED MASTER PROGRAM    │
└──────────────────────────────────────┘
                 │
                 ▼
┌──────────────────────────────────────┐
│      STORE CREATED CUSTOM CONTROL    │
│      PROGRAM IN EACH MEMORY REGION   │──── SD5
└──────────────────────────────────────┘
                 │
                 ▼
┌──────────────────────────────────────┐
│      CAUSE MASTER CONTROL SECTION    │
│         TO STORE MEMORY IMAGE        │──── SD6
└──────────────────────────────────────┘
                 │
                 ▼
┌──────────────────────────────────────┐
│  CAUSE MASTER CONTROL SECTION TO START │
│ VIRTUALIZED INDOOR UNIT CONTROL SECTIONS │──── SD7
│    AND OUTDOOR UNIT CONTROL SECTION  │
└──────────────────────────────────────┘
                 │
                 ▼
          ┌─────────────┐
          │     END     │
          └─────────────┘
```

31

FIG. 8

FIG. 9

```
                    ┌──────────┐
                    │  START   │
                    └────┬─────┘
                         ▼
┌───────────────────────────────────────────┐
│   INPUT HIGHER-LEVEL SETTING               │── SE1
│   SIGNAL TO ANY OF CONTROL DEVICES         │
└───────────────────────┬───────────────────┘
                        ▼
┌───────────────────────────────────────────┐
│   START MASTER CONTROL SECTION IN CONTROL  │── SE2
│   DEVICE THAT HAS RECEIVED INPUT           │
└───────────────────────┬───────────────────┘
                        ▼
┌───────────────────────────────────────────┐
│ TRANSMIT CONNECTION CONTROL DEVICE REQUEST │── SE3
└───────────────────────┬───────────────────┘
                        ▼
┌───────────────────────────────────────────┐
│   RECEIVE CPU TYPE, MEMORY AMOUNT,         │
│   STORAGE CAPACITY FROM CONNECTION         │── SE4
│   CONTROL DEVICE                           │
└───────────────────────┬───────────────────┘
                        ▼
┌───────────────────────────────────────────┐
│   SET MASTER CONTROL SECTION IN CONTROL    │
│   DEVICE HAVING HIGHEST CAPABILITY TO      │── SE5
│   HIGHER-LEVEL MASTER CONTROL SECTION      │
└───────────────────────┬───────────────────┘
                        ▼
┌───────────────────────────────────────────┐
│   SET IDENTIFICATION NUMBER                │── SE6
│   IN ORDER OF CAPABILITY                   │
└───────────────────────┬───────────────────┘
                        ▼
┌───────────────────────────────────────────┐
│   TRANSMIT CONNECTION EQUIPMENT REQUEST,   │── SE7
│   AND RECEIVE RESPONSE                     │
└───────────────────────┬───────────────────┘
                        ▼
┌───────────────────────────────────────────┐
│   CAUSE HIGHER-LEVEL MASTER CONTROL        │
│   SECTION TO ISSUE ASSIGNMENT INSTRUCTION  │── SE8
│   TO LOWER-LEVEL MASTER CONTROL SECTION    │
└───────────────────────┬───────────────────┘
                        ▼
┌───────────────────────────────────────────┐
│   CAUSE EACH LOWER-LEVEL MASTER            │
│   CONTROL SECTION TO CREATE AND            │── SE9
│   START VIRTUALIZED CONTROL SECTION        │
└───────────────────────┬───────────────────┘
                        ▼
                    ┌──────────┐
                    │   END    │
                    └──────────┘
```

# FIG. 10

START

CREATE OUTDOOR UNIT CONTROL SECTION AND INDOOR UNIT CONTROL SECTIONS ON NEW CONTROL DEVICE — SF1

TRANSMIT SWITCHING SIGNAL OF MASTER CONTROL SECTION TO EXISTING CONTROL DEVICE — SF2

CAUSE VIRTUALIZED CONTROL SECTION ON NEW CONTROL DEVICE TO COMMUNICATE WITH CORRESPONDING VIRTUALIZED CONTROL SECTION ON EXISTING CONTROL DEVICE AND SUCCEED INFORMATION — SF3

STOP OPERATION OF EXISTING CONTROL DEVICE — SF4

END

# FIG. 11

# FIG. 12

# FIG. 13

| PRIORITY | CAPABILITY RANGE | CONTROL RULE |
|---|---|---|
| 1 | $Q_{11}$ | ADJUST CAPABILITY BY OUTDOOR UNIT $\alpha$ |
| 2 | $Q_{11} + \Delta Q_{U12}$ | ADJUST CAPABILITY BY OUTDOOR UNIT $\alpha$ |
| 3 | $Q_{11} + Q_{22} + \Delta Q_{L12} + \Delta Q_{L23}$ | START OUTDOOR UNITS $\alpha$ AND $\beta$ ADJUST CAPABILITY BY OUTDOOR UNIT $\beta$ |
| 4 | $Q_{11} + Q_{22}$ | START OUTDOOR UNITS $\alpha$ AND $\beta$ ADJUST CAPABILITY BY OUTDOOR UNIT $\beta$ |
| . . . | . . . . | . . . . |
| n | Q1max + Q2max + Q3max | START OUTDOOR UNITS $\alpha$, $\beta$, AND $\gamma$ |

# FIG. 14

| PRIORITY | CAPABILITY RANGE [%] | CONTROL RULE |
|---|---|---|
| 1 | 60 | ADJUST CAPABILITY BY OUTDOOR UNIT B1 |
| 2 | 75 | ADJUST CAPABILITY BY OUTDOOR UNIT B1 |
| 3 | 115 | START OUTDOOR UNITS B1 AND B2 ADJUST CAPABILITY BY OUTDOOR UNIT B2 |
| 4 | 140 | START OUTDOOR UNITS B1 AND B2 ADJUST CAPABILITY BY OUTDOOR UNIT B2 |
| . . . | . . . . | . . . . |
| n | 360 | START OUTDOOR UNITS B1, B2, AND B3 |

FIG. 15

EP 3 098 533 B1

FIG. 16

MAINTENANCE AND INSPECTION DEVICE — 6

AIR CONDITIONING EQUIPMENT

VARIOUS EQUIPMENT — 91

VARIOUS DRIVERS — 92

GATEWAY — 93

— 50

84 — HEAT SOURCE UNIT CONTROL SECTION

83 — HEAT SOURCE UNIT CONTROL SECTION

82 — HEAT SOURCE UNIT HIGHER-LEVEL CONTROL SECTION

81 — AIR CONDITIONING EQUIPMENT CONTROL SECTION

80 — MASTER CONTROL SECTION

GATEWAY — 103

VARIOUS DRIVERS — 102

VARIOUS EQUIPMENT — 101

HEAT SOURCE UNIT

60a

HEAT SOURCE UNIT — 60b

5

2

7

8

EP 3 098 533 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012198020 A
- EP 2479625 A
- EP 1067445 A